# EUROPEAN PATENT APPLICATION

(11) **EP 4 224 808 A1**
(43) Date of publication of application: **09.08.2023**
(21) Application number: 20955535.8
(22) Date of filing: 29.09.2020
(51) Int. Cl.: H04L 41/00

(54) **DEVICE UPGRADE CONTROL METHOD AND APPARATUS, AND COMPUTER DEVICE AND STORAGE MEDIUM**

(71) Applicant: GUANGDONG OPPO MOBILE TELECOMMUNICATIONS CORP., LTD., Dongguan, Guangdong 523860 (CN)
(72) Inventor: LYU, Xiaoqiang, Dongguan, Guangdong 523860 (CN); LUO, Chaoming, Dongguan, Guangdong 523860 (CN); ZHANG, Jun, Dongguan, Guangdong 523860 (CN)
(74) Representative: Taor, Simon Edward William
(86) International application number: PCT/CN2020/118835
(87) International publication number: WO 2022/067509

(57) **Abstract**

A method and an apparatus for device upgrade control, a computer device, and a storage medium are provided in the disclosure, which belongs to the field of internet of things (IoT) technology. The method includes: receiving a notification message sent by a first device, the notification message containing latest version information of the client device, and the first device including at least one of the client device and a second cloud platform; acquiring current version information of the client device; and sending an upgrade message to the client device when a version corresponding to the latest version information is higher than a version corresponding to the current version information, the upgrade message being used for triggering the client device to perform version upgrade. In the technical solution, an upgrade flow of the client device can be controlled by means of a first cloud platform connected to the client device, thereby improving the security of the client device.

## Description

### TECHNICAL FIELD

This disclosure relates to the field of internet of things (IoT), and in particular, to a method and an apparatus for device upgrade control, a computer device, and a storage medium.

### RELATED ART

On the internet of things (IoT), a manufacturer of a device managed by a cloud platform is sometimes different from a manufacturer of the cloud platform. The cloud platform needs to manage client devices of different manufacturers.

In the related art, when a cloud platform manages devices of different manufacturers or different development platforms, the cloud platform needs to connect with a client device through a cross-platform technology. However, in the prior art, when a client device needs to be updated, the client device needs to connect with a corresponding upgrade server, so that the client device performs an upgrade operation.

### SUMMARY

A method and an apparatus for device upgrade control, a computer device, and a storage medium are provided in embodiments of the disclosure. Technical solutions include the following.

In an aspect, a method for device upgrade control is provided in embodiments of the disclosure. The method is performed by a first cloud platform, the first cloud platform is a cloud platform accessed by a client device, and the method includes: receiving a notification message sent by a first device, the notification message containing latest version information of the client device, and the first device including at least one of the client device and a second cloud platform; acquiring current version information of the client device; and sending an upgrade message to the client device when a version corresponding to the latest version information is higher than a version corresponding to the current version information, the upgrade message being used for triggering the client device to perform version upgrade.

In another aspect, a method for device upgrade control is provided in embodiments of the disclosure. The method is performed by a client device and includes: receiving an upgrade message sent by a first cloud platform, where the first cloud platform is a cloud platform accessed by the client device, the upgrade message is sent when the first cloud platform receives a notification message sent by a first device and a version corresponding to latest version information of the client device contained in the notification message is higher than a version corresponding to current version information of the client device; and performing version upgrade according to the upgrade message.

In another aspect, a method for device upgrade control is provided in embodiments of the disclosure. The method is performed by a second cloud platform and includes: generating a notification message containing latest version information when there is an upgrade file of a latest version of a client device; sending the notification message, where the notification message contains the latest version information of the client device, the notification message is used to trigger a first cloud platform to receive the notification message sent by a first device such that the first cloud platform can acquire current version information of the client device and send an upgrade message to the client device when a version corresponding to the latest version information is higher than a version corresponding to the current version information, where the upgrade message is used for triggering the client device to perform version upgrade.

In another aspect, a computer device is provided in embodiments of the disclosure. The computer device is a client device, and the client device includes a processor, a memory, and a transceiver. The memory stores a computer program, and the computer program is executed by the processor to implement the method for device upgrade control.

In another aspect, a computer device is provided in embodiments of the disclosure. The computer device is a first cloud platform. The first cloud platform includes a processor, a memory, and a transceiver. The memory stores a computer program, and the computer program is executed by the processor to implement the method for device upgrade control.

In another aspect, a computer device is provided in embodiments of the disclosure. The computer device is a second cloud platform. The second cloud platform includes a processor, a memory, and a transceiver. The memory stores a computer program, and the computer program is executed by the processor to implement the method for device upgrade control.

In another aspect, a computer readable storage medium is provided in embodiments of the disclosure. The storage medium stores computer programs which are loaded and executed by a processor to implement the method for device upgrade control.

In another aspect, a computer program product or a computer program are provided. The computer program product or the computer program have computer instructions stored in a computer readable storage medium. A processor of a terminal is configured to read the computer instructions from the computer readable storage medium, and the processor executes the computer instructions, so as to enable the terminal to implement the method for device upgrade control.

The technical solutions provided by the embodiments of the present disclosure may bring the following beneficial effects.

When a client device is connected to a first cloud platform, a latest version message of the client device sent by a second cloud platform or the client device are received, and according to the latest version information of the client device and the current version information, whether the client device needs to be upgraded is determined. When the client device needs to be upgraded, the first cloud platform sends an upgrade message to the client device, and thus the client device can perform version upgrade. That is, in this technical solution, an upgrade flow of the client device can be controlled by means of a first cloud platform connected to the client device; and in the case where the client device interacts with multiple cloud platforms, whether the client device is to be upgraded is still controlled by the first cloud platform, thereby improving the security of the client device in an upgrade process.

### BRIEF DESCRIPTION OF THE DRAWINGS

In order to describe technical solutions in embodiments of the disclosure more clearly, the following will give a brief introduction to the accompanying drawings required for describing embodiments. Apparently, the accompanying drawings hereinafter described are merely some embodiments of the disclosure. Based on these drawings, those of ordinary skill in the art can also obtain other drawings without creative effort.
Fig. 1 illustrates a schematic diagram of a network architecture of the internet of things (IoT) provided in an exemplary embodiment of the present disclosure.
Fig. 2 illustrates a schematic structural diagram of cloud to cloud.
Fig. 3 illustrates a schematic structural diagram of a cross-platform technology.
Fig. 4 illustrates a flowchart of a method for device upgrade control provided in an exemplary embodiment of the present disclosure.
Fig. 5 illustrates a flowchart of a method for device upgrade control provided in an exemplary embodiment of the present disclosure.
Fig. 6 illustrates a flowchart of a method for device upgrade control provided in an exemplary embodiment of the present disclosure.
Fig. 7 illustrates a schematic flowchart of a method for device upgrade control provided in an exemplary embodiment of the present disclosure.
Fig. 8 illustrates a schematic flowchart of a method for device upgrade control provided in an exemplary embodiment of the present disclosure.
Fig. 9 is a schematic flowchart of device upgrade control provided in an exemplary embodiment of the present disclosure.
Fig. 10 is a schematic flowchart of device upgrade control provided in an exemplary embodiment of the present disclosure.
Fig. 11 is a schematic flowchart of device upgrade control provided in an exemplary embodiment of the present disclosure.
Fig. 12 is a schematic flowchart of device upgrade control provided in an exemplary embodiment of the present disclosure.
Fig. 13 is a schematic flowchart of device upgrade control provided in an exemplary embodiment of the present disclosure.
Fig. 14 illustrates a block diagram of an apparatus for device upgrade control provided in an exemplary embodiment of the present disclosure.
Fig. 15 illustrates a block diagram of an apparatus for device upgrade control provided in an exemplary embodiment of the present disclosure.
Fig. 16 illustrates a block diagram of an apparatus for device upgrade control provided in an exemplary embodiment of the present disclosure.
Fig. 17 illustrates a schematic structural diagram of a computer device provided in an exemplary embodiment of the present disclosure.

### DETAILED DESCRIPTION

In order to make the objectives, technical solutions, and advantages of the present disclosure clearer, the implementations of the present disclosure are further described in detail below with reference to the accompanying drawings.

The network architecture and service scenarios described in the embodiments of the present disclosure are intended to describe the technical solutions of the embodiments of the present disclosure more clearly, and do not constitute a limitation to the technical solutions provided in the embodiments of the present disclosure. A person of ordinary skill in the art can know that, with the evolution of the network architecture and the appearance of new service scenarios, the technical solutions provided in the embodiments of the present disclosure are applicable to similar technical problems.

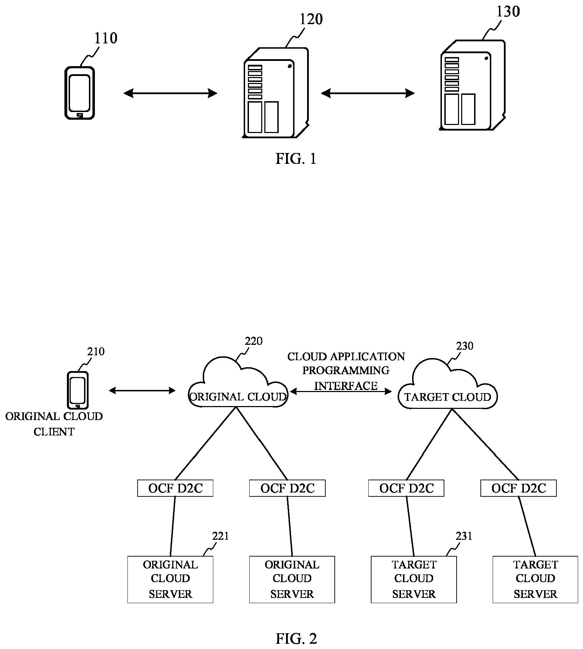

Please refer to Fig. 1, which illustrates a schematic diagram of a network architecture of the internet of things (IoT) provided in an exemplary embodiment of the present disclosure. The network architecture of the IoT may include a client device 110, a first cloud platform 120, and a second cloud platform 130.

The first cloud platform 120 and the second cloud platform 130 are cloud service platforms deployed on network side. For example, the first cloud platform 120 and the second cloud platform 130 may be cloud service platforms implemented based on a single server or multiple servers.

The first cloud platform 120 may be a cloud platform of a manufacturer different from the client device, the second cloud platform 130 is a cloud platform of the same manufacturer as the client device, and the second cloud platform 130 has information corresponding to the client device.

The client device 110 may be a computer device embedded with management software, for example, a smartphone, a tablet computer, a smart watch, a personal computer, such as a desktop computer, a portable computer, a personal workstation, and the like.

The first cloud platform 120 is connected to the client device 110 and the second cloud platform 130 respectively through a wired or wireless network.

Optionally, the wired or wireless network may use standard communication technologies and/or protocols. For example, the wired or wireless network may be a communications network based on the IoT protocol.

In the embodiment of the present disclosure, the first cloud platform 120, the second cloud platform 130, and the client device 110 may be IoT devices meeting an industry specification, for example, IoT devices meeting an open connectivity foundation (OCF) specification.

OCF is an emerging IoT application layer technology standard organization. The OCF formulates a RESTful (a design style and development mode of a network application) service framework for implementing interconnection and intercommunication between IoT devices. In an OCF service framework, an IoT device, a function service of the device, a state of the device, and other information is described through a device resource model. An IoT terminal device for providing resources is an OCF server (namely, the described server device), and a control terminal for accessing resources is an OCF client (namely, the described client device).

In the embodiment of the present disclosure, the network architecture of the described IoT may be a network structure based on cloud to cloud (C2C), or may also be a network architecture based on a cross-platform technology.

Please refer to Fig. 2, which illustrates a schematic structural diagram of cloud to cloud. As illustrated in Fig. 2, the C2C is jointly implemented by an original cloud client 210, an original cloud 220, and a target cloud 230.

The original cloud client 210 may be a user terminal, and the original cloud 220 may be a cloud server that establishes a communication connection with the original cloud client 210. The original cloud client 210 is connected to each original cloud server 221 of the original cloud client 210 in an OCF standard and in a device-to-cloud (D2C) manner. Likewise, the target cloud 220 is also connected to each target cloud server 231 of the target cloud 220 in an OCF standard and in a D2C manner.

In the cloud to cloud technology, through a cloud application programming interface set for a cloud server in the OCF specification (OCF Cloud API for cloud services), a communication channel is established between two cloud platforms, and account systems of the two cloud platforms are enabled, so that a communication connection is established between the original cloud 220 and the target cloud 230. The original cloud client 210 corresponding to the original cloud 220 may control, in a manner such as through an application (APP), a device corresponding to the target cloud 230 that has not established a communication connection with the original cloud client.

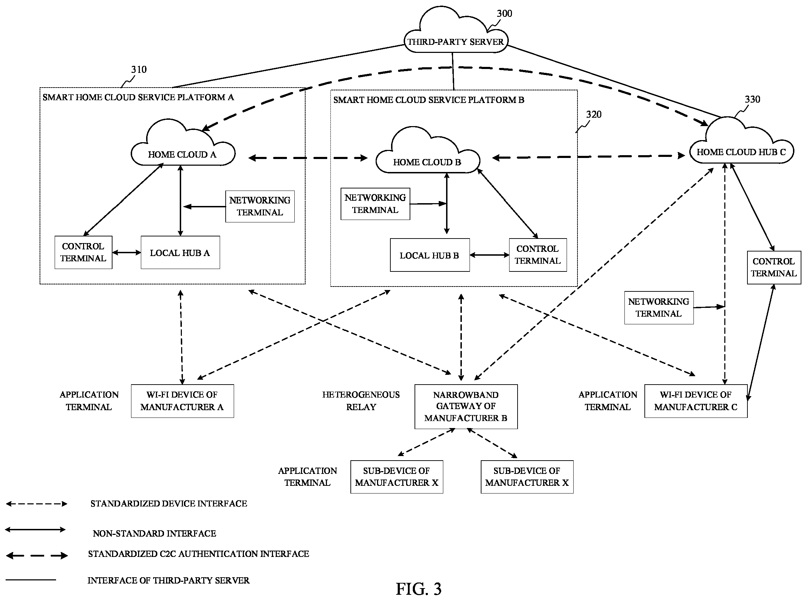

Please refer to Fig. 3, which illustrates a schematic structural diagram of a cross-platform technology. As illustrated in Fig. 3, a third-party server 300 is connected to a smart home cloud service platform A 310, a smart home cloud service platform B 320, and a home cloud hub C 330 through a third-party interface.

In the smart home cloud service platform A 310, home cloud A, a control terminal, and a local hub mutually establish a communication connection with one another via a non-standard interface, in which the home cloud A and the local hub establish a communication connection via a networking terminal. Likewise, in the smart home cloud service platform B 320, home cloud B, a control terminal, and a local hub establish a communication connection with one another, where the home cloud B and the local hub establish a communication connection via a networking terminal.

Through the cross-platform technology, a device produced by manufacturer A may directly access a platform of manufacturer B after access authentication through a standardized cloud to cloud authentication interface. Thus, the APP of manufacturer B may also control device A through platform B. As illustrated in Fig. 3, an application terminal may access through a wireless fidelity (Wi-Fi) device of manufacturer A, and may also access through a Wi-Fi device of manufacturer C, or may access through a narrowband gateway of manufacturer B with a sub-device of manufacturer X and a sub-device of manufacturer Y being a heterogeneous relay. However, the smart home cloud service platform A 310, the smart home cloud service platform B 320 and the home cloud hub C 330 can perform access authentication via the third-party server 300, i.e., allow data access between one another. Therefore, an application terminal accessing a network via any one of the described modes can access cloud platforms of different manufacturers via standardized device interfaces. APPs of different platforms may also control, through the platform, devices of different manufactures that access the platform.

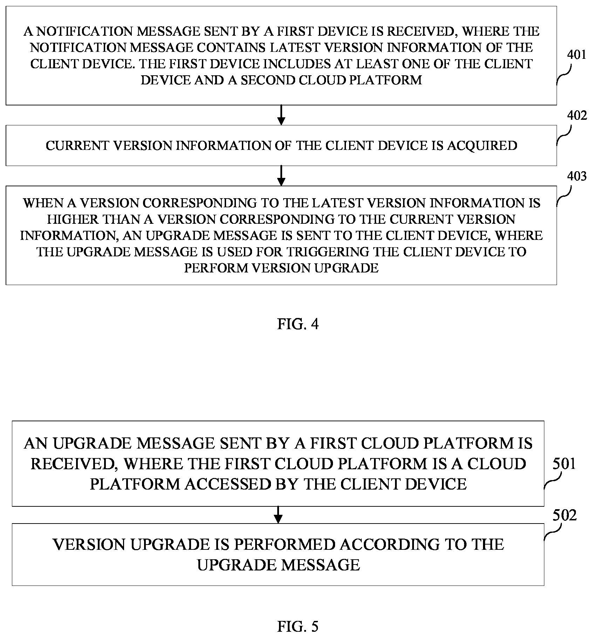

Please refer to Fig. 4, which illustrates a flowchart of a method for device upgrade control provided in an exemplary embodiment of the present disclosure. The method may be executed by a first cloud platform, and the first cloud platform may be the first cloud platform 120 illustrated in Fig. 1. The method may include the following steps.

S401, a notification message sent by a first device is received, where the notification message contains latest version information of the client device. The first device includes at least one of the client device and a second cloud platform.

In a possible implementation, the first cloud platform and the client device are a platform and a device corresponding to different manufacturers, that is, the manufacturer of the first cloud platform is different from the manufacturer of the client device. That is, the first cloud platform may not contain information corresponding to the client device, for example, upgrade information or version information corresponding to the client device.

S402, current version information of the client device is acquired.

The version information indicates a current version of the client device.

S403, when a version corresponding to the latest version information is higher than a version corresponding to the current version information, an upgrade message is sent to the client device, where the upgrade message is used for triggering the client device to perform version upgrade.

In a possible implementation, the first device is the client device. When the client device accesses the first cloud platform, device information of the client device is acquired, where the device information contains a device model of the client device. When a notification message corresponding to the device model is not subscribed to from the client device, a second upgrade-information-subscription request is sent to the client device, where the second upgrade-information-subscription request contains the device model and an identifier of the first cloud platform. And a second upgrade-information-subscription response sent by the client device is received.

In another possible implementation, the first device is the second cloud platform. When the client device accesses the first cloud platform, device information of the client device is acquired, where the device information contains a device model of the client device. When the notification message corresponding to the device model is not subscribed to from the second cloud platform, a first upgrade-information-subscription request is sent to the second cloud platform, where the first upgrade-information-subscription request contains the device model and an identifier of the first cloud platform. A first upgrade-information-subscription response sent by the second cloud is received.

In a possible implementation, a first file-acquisition request is sent to the second cloud platform according to an address of an upgrade file; the upgrade file sent by the second cloud platform is received; and the upgrade file is sent to the client device when a second file-acquisition request sent by the client device is received.

In a possible implementation, the notification message further contains an address of an upgrade file of the client device. When a second file-acquisition request sent by the client device is received, a first file-acquisition request is sent to the second cloud platform according to the address of the upgrade file. The upgrade file sent by the second cloud platform is received. The upgrade file is sent to the client device.

In a possible implementation, the first file-acquisition request containing an access token is sent to the second cloud platform according to the address of the upgrade file.

In a possible implementation, the notification message contains an address of an upgrade file of the client device. When a third file-acquisition request sent by the client device is received, an upgrade-file acquisition response is sent to the client device, where the upgrade-file acquisition response contains the address of the upgrade file.

In a possible implementation, the first upgrade-information-subscription response and the upgrade-file acquisition response further each contain an access token.

In a possible implementation, when a third file-acquisition request sent by the client device is received, an address acquisition request is sent to the second cloud platform, and the address acquisition request contains a device model; an address acquisition response sent by the second cloud platform is received, where the address acquisition response contains an address of an upgrade file of the client device; an upgrade-file acquisition response is sent to the client device, where the upgrade-file acquisition response contains the address of the upgrade file.

In a possible implementation, the address acquisition response and the upgrade-file acquisition response each further contain an access token.

In conclusion, in the technical solutions according to the embodiment of the present disclosure, the latest version message of the client device sent by the second cloud platform is received by means of the first cloud platform connected to the client device, and whether the client device needs to be upgraded is determined by comparing the current version information with the latest version information of the client device. When the client device needs to be upgraded, the upgrade message is sent to the client device, thus, the client device is upgraded. Namely, in the described technical solution, the client device can be directly indicated an upgrade process of the client device via the first cloud platform by means of information interaction between the first cloud platform and the second cloud platform, thereby improving the upgrade control efficiency of the client device.

Please refer to Fig. 5, which illustrates a flowchart of a method for device upgrade control provided in an exemplary embodiment of the present disclosure. The method may be executed by a client device. The client device may be the client device 110 illustrated in Fig. 1. The method may include the following steps:

S501, an upgrade message sent by a first cloud platform is received, where the first cloud platform is a cloud platform accessed by the client device.

The upgrade message is sent when the first cloud platform receives a notification message sent by a first device and a version corresponding to latest version information of the client device contained in the notification message is higher than a version corresponding to current version information of the client device.

In a possible implementation, a second cloud platform and the client device are a cloud platform and a client device that are corresponding to a same manufacturer, that is, the manufacturer of the second cloud platform is the same as the manufacturer of the client device.

The second cloud platform may have the latest version information corresponding to the client device. When the second cloud platform receives the notification message sent by the first cloud platform, the second cloud platform compares the current version information of the client device contained in the notification message and the latest version information corresponding to the client device at the second cloud platform. The second cloud platform sends the notification message when the latest version information is higher than the current version information of the client device, but does not send the notification message or sends a notification message indicating not upgrading the client device when the latest version information is not higher than the current version information of the client device.

S502, version upgrade is performed according to the upgrade message.

In a possible implementation, a second file-acquisition request is sent to the first cloud platform; an upgrade file of the client device sent by the first cloud platform is received; and version upgrade is performed according to the upgrade file.

In a possible implementation, a third file-acquisition request is sent to the first cloud platform. An upgrade-file acquisition response sent by the first cloud platform is received, where the upgrade-file acquisition response contains an address of an upgrade file of the client device. According to the address of the upgrade file, a fourth file-acquisition request is sent to a second cloud platform. The upgrade file sent by the second cloud platform is received. Additionally, version upgrade is performed according to the upgrade file.

In a possible implementation, the fourth file-acquisition request containing the access token is sent to the second cloud platform according to the address of the upgrade file.

In a possible implementation, the first device is the client device. When the client device accesses the first cloud platform, device information of the client device is sent to the first cloud platform, where the device information contains a device model of the client device. A second upgrade-information-subscription request sent by the first cloud platform is received, where the second upgrade-information-subscription request is sent when the first cloud platform does not subscribe to the client device for a notification message corresponding to the device model; the second upgrade-information-subscription request contains the device model and an identifier of the first cloud platform. A second upgrade-information-subscription response to the first cloud platform is sent. Additionally, the notification message is sent to the first cloud platform.

In a possible implementation, a notification inquiry request is sent to the second cloud platform, where the notification inquiry request is used to acquire the latest version information of the client device; the notification message sent by the second cloud platform is received; and the notification message is sent to the first cloud platform.

In conclusion, in the technical solutions according to the embodiment of the present disclosure, the latest version message of the client device sent by the second cloud platform is received by means of the first cloud platform connected to the client device, and whether the client device needs to be upgraded is determined by comparing the current version information with the latest version information of the client device. When the client device needs to be upgraded, the upgrade message is sent to the client device, thus, the client device is upgraded. Namely, in the described technical solution, the client device can be directly indicated an upgrade process of the client device via the first cloud platform by means of information interaction between the first cloud platform and the second cloud platform, thereby improving the upgrade control efficiency of the client device.

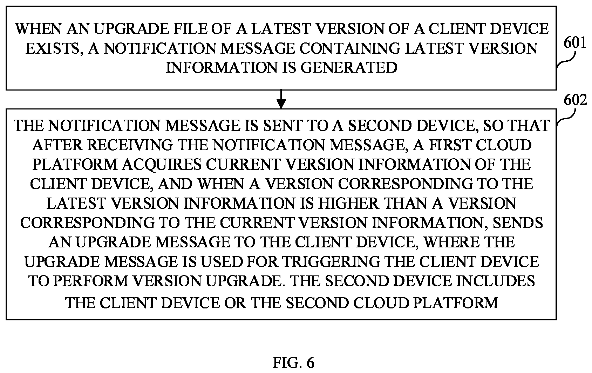

Please refer to Fig. 6, which illustrates a flowchart of a method for device upgrade control provided in an exemplary embodiment of the present disclosure. The method may be executed by a second cloud platform. The second cloud platform may be the second cloud platform 130 illustrated in Fig. 1. The method may include the following steps.

S601, when an upgrade file of a latest version of a client device exists, a notification message containing latest version information is generated.

The upgrade file of the latest version is used to enable the client device to upgrade from current version state to the latest version state.

S602, the notification message is sent to a second device, so that after receiving the notification message, a first cloud platform acquires current version information of the client device. When a version corresponding to the latest version information is higher than a version corresponding to the current version information, an upgrade message is sent to the client device, where the upgrade message is used for triggering the client device to perform version upgrade. The second device includes the client device or the second cloud platform.

The second device includes at least one of the client device and the first cloud platform.

In a possible implementation, a first upgrade-information-subscription request sent by the first cloud platform is received, the first upgrade-information-subscription request contains a device model and an identifier of the first cloud platform; and a first upgrade-information-subscription response is sent to the first cloud platform.

In a possible implementation, a first file-acquisition request that is sent by the first cloud platform according to the address of the upgrade file is received, and the upgrade file is sent to the first cloud platform; or a fourth file-acquisition request that is sent by the client device according to the address of the upgrade file is received, and the upgrade file is sent to the client device.

In a possible implementation, the first file-acquisition request is received, where the first file-acquisition request is sent by the first cloud platform according to the address of the upgrade file and contains an access token. Receiving the fourth file-acquisition request which is sent by the client device according to the address of the upgrade file includes: receiving the fourth file-acquisition request which is sent by the client device according to the address of the upgrade file and contains the access token.

In a possible implementation, the notification message further contains the address of the upgrade file. An address acquisition request which is sent by the first cloud platform according to the address of the upgrade file is received, where the address acquisition request contains the device model. An address acquisition response is sent to the first cloud platform according to the device model, where the address acquisition response contains the address of the upgrade file of the client device. A fourth file-acquisition request that is sent by the client device according to the address of the upgrade file is received. Additionally, the upgrade file is sent to the client device.

In a possible implementation, the address acquisition response and the fourth file-acquisition request each contain the access token.

In a possible implementation, the second device is the client device. A notification inquiry request sent by the client device is received, where the notification inquiry request is used to acquire latest version information of the client device. Additionally, the notification message is sent to the client device.

In conclusion, in the technical solutions according to the embodiment of the present disclosure, the latest version message of the client device sent by the second cloud platform is received by means of the first cloud platform connected to the client device, and whether the client device needs to be upgraded is determined by comparing the current version information with the latest version information of the client device. When the client device needs to be upgraded, the upgrade message is sent to the client device, thus, the client device is upgraded. Namely, in the described technical solution, the client device can be directly indicated an upgrade process of the client device via the first cloud platform by means of information interaction between the first cloud platform and the second cloud platform, thereby improving the upgrade control efficiency of the client device.

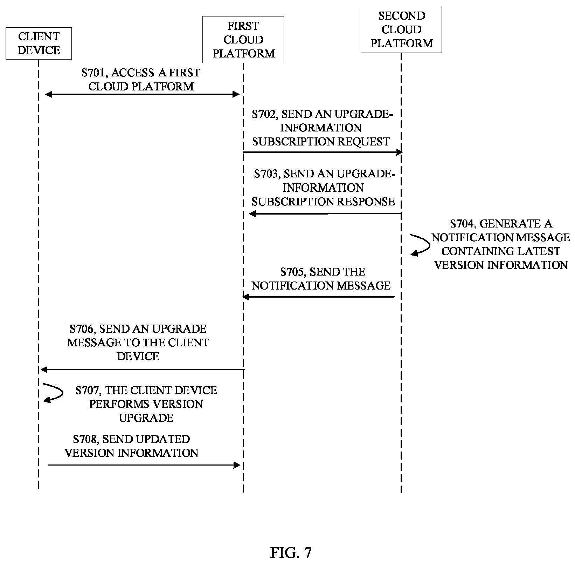

Please refer to Fig. 7, which illustrates a schematic flowchart of a method for device upgrade control provided in an exemplary embodiment of the present disclosure. The method may be executed by a client device, a first cloud platform, and a second cloud platform together. When the first device is the second cloud platform, the method may include the following steps.

S701, a client device accesses a first cloud platform.

In a possible implementation, the client device and the first cloud platform are products of different manufacturers, and the client device is connected to the first cloud platform through a cross-platform technology.

That is, the client device and the first cloud platform may be products developed based on different development platforms, or the first cloud platform does not support direct connection with the client device, and needs to be connected through the cross-platform technology. For example, a developer may write a connection program by using a cross-platform language, so as to implement cross-platform connection between the client device and the cloud platform.

In a possible implementation, the client device makes access to the first cloud platform through product access authentication.

The client device may perform product access authentication by sending information such as a device identifier, a client version, and a manufacture ID corresponding to the client device.

In a possible implementation, when the client device accesses the first cloud platform, the first cloud platform acquires device information of the client device, where the device information contains a device model of the client device.

In a possible implementation, after the client device accesses the first cloud platform by means of product access authentication, the client device transmits device information corresponding to the client device to the first cloud platform, where the device information may contain a model of the client device, a manufacture identifier corresponding to the client, a manufacture upgrade server address, current version information corresponding to the client, etc.

In a possible implementation, when the client device accesses the first cloud platform, the first cloud platform acquires device information of the client device, and determines a platform (namely, the second cloud platform) corresponding to the device information according to the device information.

The first cloud platform may also be connected to the second cloud platform through a cross-platform technology.

In a possible implementation, the first cloud platform detects whether a notification message corresponding to the client device is subscribed to from the second cloud platform. When the first cloud platform detects that the first cloud platform subscribes to the second cloud platform for the notification message corresponding to the client device, the first cloud platform may receive a notification message issued by the second cloud platform according to the latest version corresponding to the client device. When the first cloud platform detects that the notification message corresponding to the client device is not subscribed to from the second cloud platform, it indicates that the first cloud platform needs to subscribe to the second cloud platform for the notification message, so that when the second cloud platform has the latest version of the client device, the first cloud platform may receive the notification message.

In a possible implementation, the first cloud platform determines, according to manufacture information corresponding to the client device.

In a possible implementation, the first cloud platform may determine whether the notification message corresponding to the client device is subscribed to by detecting whether the first cloud platform has the notification message which is sent by the second cloud platform and corresponds to the client device.

S702, the first cloud platform sends a first upgrade-information-subscription request to the second cloud platform.

In a possible implementation, when the first cloud platform does not subscribe to the second cloud platform for the notification message corresponding to the device model, the first cloud platform sends a first upgrade-information-subscription request to the second cloud platform, where the first upgrade-information-subscription request contains the device model and an identifier of the first cloud platform.

S703, the first cloud platform receives a first upgrade-information-subscription response sent by the second cloud platform.

In a possible implementation, the second cloud platform receives the first upgrade-information-subscription request sent by the first cloud platform, where the first upgrade-information-subscription request contains the device model and the identifier of the first cloud platform. The second cloud platform sends the first upgrade-information-subscription response to the first cloud platform.

The first upgrade-information-subscription response indicates that the second cloud platform successfully receives the first upgrade-information-subscription request sent by the first cloud platform, that is, the second cloud platform successfully subscribes to the upgrade information corresponding to the client device for the first cloud platform.

S704, when the upgrade file of the latest version of the client device exists in the second cloud platform, a notification message containing latest version information is generated.

In a possible implementation, the notification message further contains an address of the upgrade file.

In another possible implementation, the notification message further contains a device model corresponding to the client device.

S705, the second cloud platform sends the notification message to the first cloud platform, where the first cloud platform is a cloud platform accessed by the client device.

Correspondingly, the first cloud platform receives the notification message sent by the second cloud platform, where the notification message contains the latest version information of the client device.

In a possible implementation, the notification message is used for triggering the first cloud platform to send an upgrade message to the client device when a version corresponding to the latest version information is higher than a version corresponding to current version information of the client device, and the upgrade message is used for instructing the client device to perform version upgrade.

In a possible implementation, the notification message includes an address of the upgrade file of the client device. When receiving a third file-acquisition request sent by the client device, the first cloud platform sends a first upgrade-file-acquisition response to the client device, where the first upgrade-file-acquisition response contains the address of the upgrade file.

In a possible implementation, the first upgrade-information-subscription response and the upgrade-file acquisition response each further contain an access token.

In a possible implementation, when receiving a third file-acquisition request sent by the client device, the first cloud platform sends an address acquisition request to the second cloud platform; the address acquisition request contains the device model; the first cloud platform receives an address acquisition response sent by the second cloud platform, the address acquisition response contains an address of the upgrade file of the client device; an upgrade-file acquisition response is sent to the client device, where the upgrade-file acquisition response contains the address of the upgrade file.

The address acquisition request contains the identifier of the client device and the identifier of the first cloud platform.

In a possible implementation, the address acquisition response and the upgrade-file acquisition response each further contain an access token.

S706, when the version corresponding to the latest version information is higher than the version corresponding to the current version information, the first cloud platform sends an upgrade message to the client device.

The upgrade message is used for triggering the client device to perform version upgrade.

In a possible implementation, when the version corresponding to the latest version information is an upgraded version of the version corresponding to the current version information, the first cloud platform sends an upgrade message to the client device.

When the version corresponding to the latest version information is higher than the version corresponding to the current version information, it may indicate that the version corresponding to the current version information is an upgraded version of the version corresponding to the current version information, that is, the version corresponding to the current version information may be upgraded to the version corresponding to the latest version information.

In a possible implementation, the notification message contains the address of the upgrade file of the client device. The first cloud platform sends a first file-acquisition request to the second cloud platform according to the address of the upgrade file and receives the upgrade file sent by the second cloud platform. When receiving a second file-acquisition request sent by the client device, the first cloud platform sends the upgrade file to the client device.

The first file-acquisition request is a file acquisition request sent by the first cloud platform to the second cloud platform, and the first file-acquisition request is used for acquiring an upgrade file corresponding to the client device in the second cloud platform. The second file-acquisition request is a file acquisition request sent by the client device to the second cloud platform, and the second file-acquisition request is used for the client device to acquire the upgrade file corresponding to the client device from the first cloud platform.

In a possible implementation, the first file-acquisition request further contains a device model or a device identifier, and current version information.

In another possible implementation, the notification message contains the address of the upgrade file of the client device. When receiving a second file-acquisition request sent by the client device, the first cloud platform sends the first file-acquisition request to the second cloud platform according to the address of the upgrade file, receives the upgrade file sent by the second cloud platform, and sends the upgrade file to the client device.

In a possible implementation, the first upgrade-information-subscription response contains an access token; and the first file-acquisition request containing the access token is sent to the second cloud platform according to the address of the upgrade file.

The access token may be generated according to a device ID of the first cloud platform, and the access token may have a correspondence with the device ID of the first cloud platform, that is, the first cloud platform may acquire the upgrade file in the second cloud platform by using the access token.

The first cloud platform is a cloud platform accessed by the client device, and the upgrade message is sent when the first cloud platform receives a notification message sent by the second cloud platform and the version corresponding to the latest version information of the client device contained in the notification message is higher than the version corresponding to the current version information of the client device.

In a possible implementation, the second cloud platform receives the first file-acquisition request that is sent by the first cloud platform according to the address of the upgrade file. The second cloud platform sends the upgrade file to the first cloud platform.

In a possible implementation, the second cloud platform receives the first file-acquisition request that is sent by the first cloud platform according to the address of the upgrade file and contains the access token.

In a possible implementation, the second cloud platform receives a fourth file-acquisition request that is sent by the client device according to the address of the upgrade file, and sends the upgrade file to the client device.

In another possible implementation, the second cloud platform receives the fourth file-acquisition request that is sent by the client device according to the address of the upgrade file and contains the access token.

S707, the client device performs version upgrade according to the upgrade message.

In a possible implementation, the client device sends a second file-acquisition request to the first cloud platform; the client device receives an upgrade file of the client device sent by the first cloud platform; and the client device performs version upgrade according to the upgrade file.

In another possible implementation, the client device sends a third file-acquisition request to the first cloud platform, and receives an upgrade-file acquisition response sent by the first cloud platform, where the upgrade-file acquisition response contains the address of an upgrade file of the client device. The client device sends a fourth file-acquisition request to the second cloud platform according to the address of the upgrade file. The client device receives the upgrade file sent by the second cloud platform.

In a possible implementation, the client device sends, according to the address of the upgrade file, a fourth file-acquisition request containing the access token to the second cloud platform.

In a possible implementation, the fourth file-acquisition request can contain at least one of the current version information and a device identifier of the client device.

In a possible implementation, the client device receives an address acquisition request that is sent by the first cloud platform according to the address of the upgrade file, where the address acquisition request contains the device model. The client device sends an address acquisition response to the first cloud platform according to the device model, and the address acquisition response contains the address of the upgrade file of the client device. The second cloud platform receives the fourth file-acquisition request that is sent by the client device according to the address of the upgrade file, and sends the upgrade file to the client device.

In a possible implementation, the address acquisition response and the fourth file-acquisition request each contain an access token.

S708, the client device sends updated version information to the first cloud platform.

After updating the client device by using the upgrade file, the updated version information is sent to the first cloud platform, and the first cloud platform replaces version information corresponding to the client device with the updated version information.

In a possible implementation, when the client device is updated according to the upgrade file, the client device acquires upgrade information corresponding to the client device, and sends the upgrade information to the first cloud platform.

The upgrade information contains information such as an upgrade percentage, an upgrade status, and an upgrade result. The first cloud platform may acquire, in real time, upgrade information in a process in which the client device performs upgrade according to the upgrade file.

In conclusion, in the technical solutions according to the embodiment of the present disclosure, the latest version message of the client device sent by the second cloud platform is received by means of the first cloud platform connected to the client device, and whether the client device needs to be upgraded is determined by comparing the current version information with the latest version information of the client device. When the client device needs to be upgraded, an upgrade message is sent to the client device, thus, the client device is upgraded. Namely, in the described technical solution, the client device can be directly indicated an upgrade process of the client device via the first cloud platform by means of information interaction between the first cloud platform and the second cloud platform, thereby improving the upgrade control efficiency of the client device.

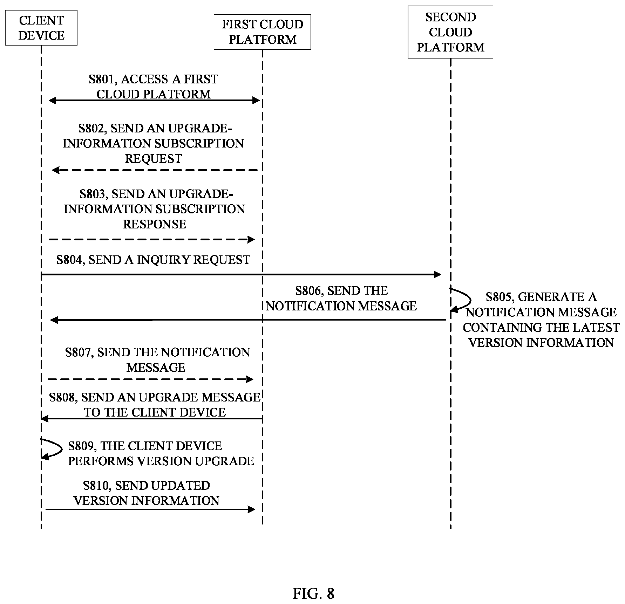

Please refer to Fig. 8, which illustrates a schematic flowchart of a method for device upgrade control provided in an exemplary embodiment of the present disclosure. The method may be executed by a client device, a first cloud platform, and a second cloud platform together. When the first device is the client device, the method may include the following steps.

S801, a client device accesses a first cloud platform.

In a possible implementation, the client device and the first cloud platform are products corresponding to different manufacturers, and the client device is connected to the first cloud platform through a cross-platform technology.

That is, the client device and the first cloud platform may be products developed based on different development platforms, or the first cloud platform does not support direct connection with the client device, and needs to be connected through the cross-platform technology. For example, a developer may write a connection program in a cross-platform language, so as to implement cross-platform connection between the client device and the cloud platform.

In a possible implementation, the client device makes access to the first cloud platform through product access authentication.

The client device may perform product access authentication by sending information such as a device identifier, a client version, and a manufacture ID corresponding to the client device.

In a possible implementation, when the client device accesses the first cloud platform, the first cloud platform acquires device information of the client device, where the device information contains a device model of the client device.

In a possible implementation, after the client device accesses the first cloud platform by means of product access authentication, the client device sends device information corresponding to the client device to the first cloud platform, where the device information may contain a model of the client device, a manufacture identifier corresponding to the client, a manufacture upgrade server address, current version information corresponding to the client, etc.

In a possible implementation, when the client device accesses the first cloud platform, the first cloud platform acquires device information of the client device, and determines a platform (namely, the second cloud platform) corresponding to the device information according to the device information.

The first cloud platform may also be connected to the second cloud platform through a cross-platform technology.

In a possible implementation, the first cloud platform determines, according to manufacture information corresponding to the client device.

In a possible implementation, the first cloud platform may determine whether the notification message corresponding to the client device is subscribed to by detecting whether the first cloud platform has a notification message sent by the client device.

S802, the first cloud platform sends a second upgrade-information-subscription request to the client device.

In a possible implementation, when the first cloud platform does not subscribe to the client device for the notification message corresponding to the device model, the first cloud platform sends the second upgrade-information-subscription request to the client device, where the second upgrade-information-subscription request contains the device model and an identifier of the first cloud platform.

S803, the first cloud platform receives a second upgrade-information-subscription response sent by the client device.

In a possible implementation, the second cloud platform receives the second upgrade-information-subscription request sent by the client device, where the second upgrade-information-subscription request contains the device model and the identifier of the first cloud platform. The second cloud platform sends the second upgrade-information-subscription response to the first cloud platform.

The second upgrade-information-subscription response indicates that the second cloud platform successfully receives the second upgrade-information-subscription request sent by the client device, that is, the second cloud platform successfully subscribes to the upgrade information corresponding to the client device for the client device.

S804, the client device sends a notification inquiry request to the second cloud platform.

The notification inquiry request is used to acquire latest version information of the client device.

S805, when the upgrade file of the latest version of the client device exists in the second cloud platform, a notification message containing the latest version information is generated.

In a possible implementation, after receiving the notification inquiry request sent by the client device, the second cloud platform queries whether an upgrade file of the latest version of the client device exists in the second cloud platform.

When it is queried that the upgrade file of the latest version of the client device exists in the second cloud platform, the notification message is generated according to the version information (namely, the latest version information) of the upgrade file.

In a possible implementation, the notification message further contains an address of the upgrade file.

In another possible implementation, the notification message further contains a device model corresponding to the client device.

S806, the second cloud platform sends the notification message to the client device.

In a possible implementation, the notification message is used to instruct the client device to forward the notification message.

S807, the client device sends the notification message to the first cloud platform.

Correspondingly, the first cloud platform receives the notification message sent by the client device.

In a possible implementation, the notification message is used for triggering the first cloud platform to send an upgrade message to the client device when a version corresponding to the latest version information is higher than a version corresponding to current version information of the client device, and the upgrade message is used for instructing the client device to perform version upgrade.

The notification message contains the latest version information of the client device.

In a possible implementation, the notification message contains an upgrade address of the upgrade file of the client device. When receiving a third file-acquisition request sent by the client device, the first cloud platform sends an upgrade-file acquisition response to the client device, where the upgrade-file acquisition response contains the address of the upgrade file.

The address of the upgrade file may be acquired by the first cloud platform from the client device, that is, after the client device receives the notification message of the second cloud platform, the first cloud platform subscribes to the client device and after the subscription is successful, the client device sends the notification message containing the address of the upgrade file to the first cloud platform.

In a possible implementation, the second upgrade-information-subscription response and the upgrade-file acquisition response further contain an access token.

The access token is used for acquiring an access permission to data in the second cloud platform.

In a possible implementation, when receiving a third file-acquisition request sent by the client device, the first cloud platform sends an address acquisition request to the second cloud platform, where the address acquisition request contains the device model. The first cloud platform receives an address acquisition response sent by the second cloud platform, the address acquisition response contains an address of an upgrade file of the client device. Additionally, the first cloud platform sends an upgrade-file acquisition response to the client device, where the upgrade-file acquisition response contains the address of the upgrade file.

The address acquisition request contains an identifier of the client device and the identifier of the first cloud platform.

In a possible implementation, the address acquisition response and the upgrade-file acquisition response further contain an access token.

S808, when the version corresponding to the latest version information is higher than the version corresponding to the current version information, the first cloud platform sends an upgrade message to the client device.

The upgrade message is used for triggering the client device to upgrade the version.

In a possible implementation, when the version corresponding to the latest version information is an upgraded version of the version corresponding to the current version information, the first cloud platform sends the upgrade message to the client device.

When the version corresponding to the latest version information is higher than the version corresponding to the current version information, it may indicate that the version corresponding to the latest version information is an upgraded version of the version corresponding to the current version information, that is, the version corresponding to the current version information may be upgraded to the version corresponding to the latest version information.

In a possible implementation, the notification message contains the address of the upgrade file of the client device. The first cloud platform sends a first file-acquisition request to the second cloud platform according to the address of the upgrade file, and receives the upgrade file sent by the second cloud platform. When receiving a second file-acquisition request sent by the client device, the first cloud platform sends the upgrade file to the client device.

The first file-acquisition request is a file acquisition request sent by the first cloud platform to the second cloud platform, and the first file-acquisition request is used for acquiring the upgrade file corresponding to the client device in the second cloud platform. The second file-acquisition request is a file acquisition request sent by the client device to the second cloud platform, and the second file-acquisition request is used for the client device to acquire the upgrade file corresponding to the client device from the first cloud platform.

In a possible implementation, the first file-acquisition request further contains a device model or a device identifier, and current version information.

In another possible implementation, the notification message contains the address of the upgrade file of the client device. When receiving a second file-acquisition request sent by the client device, the first cloud platform sends the first file-acquisition request to the second cloud platform according to the address of the upgrade file, receives the upgrade file sent by the second cloud platform, and sends the upgrade file to the client device.

In a possible implementation, the second upgrade-information-subscription response contains the access token; and the first file-acquisition request containing the access token is sent to the second cloud platform according to the address of the upgrade file.

The access token may be generated according to a device ID of the first cloud platform, and the access token may have a correspondence with the device ID of the first cloud platform, that is, the first cloud platform may acquire the upgrade file in the second cloud platform by using the access token.

The first cloud platform is a cloud platform accessed by the client device; and the upgrade message is sent when the first cloud platform receives the notification message sent by the client device and the version corresponding to the latest version information of the client device contained in the notification message is higher than the version corresponding to the current version information of the client device.

In a possible implementation, the second cloud platform receives the first file-acquisition request that is sent by the first cloud platform according to the address of the upgrade file. The second cloud platform sends the upgrade file to the first cloud platform.

In a possible implementation, the second cloud platform receives the first file-acquisition request that is sent by the first cloud platform according to the address of the upgrade file and contains the access token.

In a possible implementation, the second cloud platform receives a fourth file-acquisition request that is sent by the client device according to the address of the upgrade file, and the upgrade file is sent to the client device.

In another possible implementation, the second cloud platform receives the fourth file-acquisition request that is sent by the client device according to the address of the upgrade file and contains the access token.

S809, the client device performs version upgrade according to the upgrade message.

In a possible implementation, the client device sends a second file-acquisition request to the first cloud platform, receives the upgrade file of the client device sent by the first cloud platform, and performs version upgrade according to the upgrade file.

In another possible implementation, the client device sends a third file-acquisition request to the first cloud platform and receives an upgrade-file acquisition response sent by the first cloud platform, where the upgrade-file acquisition response contains the address of the upgrade file of the client device. The client device sends a fourth file-acquisition request to the second cloud platform according to the address of the upgrade file and receives the upgrade file sent by the second cloud platform.

In a possible implementation, the client device sends, according to the address of the upgrade file, a fourth file-acquisition request containing the access token to the second cloud platform.

In a possible implementation, the fourth file-acquisition request can contain at least one of the current version information and a device identifier of the client device.

In a possible implementation, the client device receives an address acquisition request that is sent by the first cloud platform according to the address of the upgrade file, where the address acquisition request contains the device model. The client device sends an address acquisition response to the first cloud platform according to the device model, where the address acquisition response contains the address of the upgrade file of the client device. The second cloud platform receives the fourth file-acquisition request that is sent by the client device according to the address of the upgrade file, and sends the upgrade file to the client device.

In a possible implementation, the address acquisition response and the fourth file-acquisition request contain an access token.

S810, the client device sends updated version information to the first cloud platform.

After the client device is updated by using the upgrade file, the updated version information is sent to the first cloud platform, and the first cloud platform replaces version information corresponding to the client device with the updated version information.

In a possible implementation, when the client device is updated according to the upgrade file, upgrade information corresponding to the client device is acquired, and the upgrade information is sent to the first cloud platform.

The upgrade information contains information such as an upgrade percentage, an upgrade status, and an upgrade result. The first cloud platform may acquire, in real time, upgrade information in a process in which the client device performs upgrade according to the upgrade file.

In conclusion, in the technical solutions according to the embodiment of the present disclosure, the latest version message of the client device sent by the second cloud platform is received by means of the first cloud platform connected to the client device, and whether the client device needs to be upgraded is determined by comparing the current version information with the latest version information of the client device. When the client device needs to be upgraded, an upgrade message is sent to the client device, thus, the client device is upgraded. Namely, in the described technical solution, the client device can be directly indicated an upgrade process of the client device via the first cloud platform by means of information interaction between the first cloud platform and the second cloud platform, thereby improving the upgrade control efficiency of the client device.

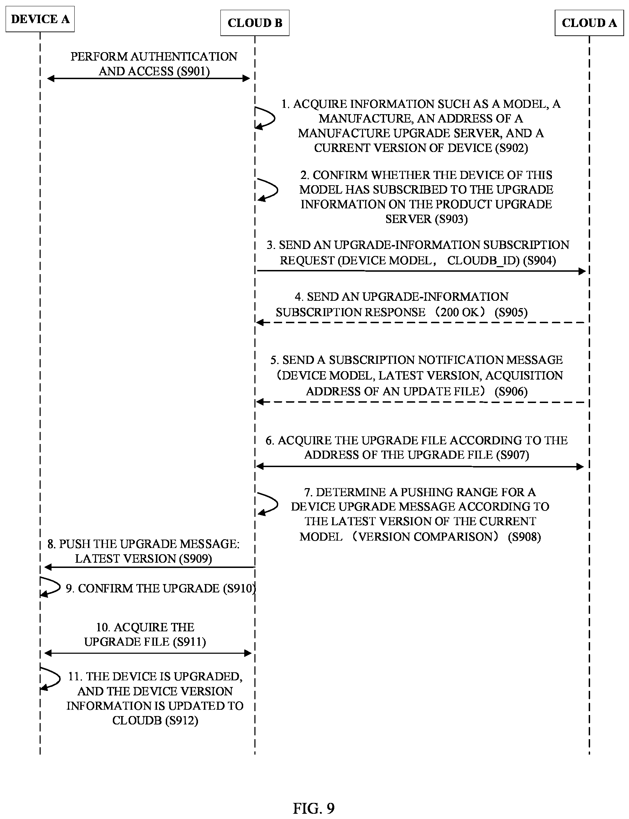

Please refer to Fig. 9, which is a schematic flowchart of device upgrade control provided in an exemplary embodiment of the present disclosure. As illustrated in Fig. 7, for example, the first cloud platform and the second cloud platform are servers, a data transmission process between the terminal and the first cloud platform as well as between the terminal and the second cloud platform in the technical solution illustrated in Fig. 5 is as follows:
S901, product access authentication and access are performed. Device A (a client device) is connected to CloudB (a first cloud platform) through product access authentication of CloudB.

Device A and CloudB may be products corresponding to different manufacturers, that is, device A and CloudB are located in different network platforms. Therefore, device A and CloudB need to be connected through a cross-platform technology.

S902, CloudB acquires information such as a model, a manufacture, an address of a manufacture upgrade server, and a current version of device A.

The information such as the model, the manufacture, the manufacture upgrade server address, and the current version of device A may be acquired by CloudB by sending an acquisition request to device A, and may also be sent to CloudB by device A in a product access authentication process with CloudB.

S903, CloudB confirms whether the device of this model has subscribed to the upgrade information on the product upgrade server.

The device of this model is a device corresponding to the model of device A, and the product upgrade server is a server CloudA (a second cloud platform) corresponding to device A. When CloudB has subscribed to upgrade information corresponding to the device of the model from CloudA, that is, CloudB already has the upgrade information corresponding to the device of the model issued by CloudA, and device A may directly send a request to CloudB for updating. When CloudB does not subscribe to the upgrade information corresponding to the device of this model from CloudA, it indicates that CloudB is unable to instruct device A to complete device upgrade at this time, and therefore, CloudB needs further information interaction with CloudA.

S904, CloudB sends a first upgrade-information-subscription request to CloudA.

The first upgrade-information-subscription request contains the device model information corresponding to device A and ID information of CloudB.

S905, after receiving the first upgrade-information-subscription request sent by CloudB, CloudA sends a first upgrade-information-subscription response to CloudB.

CloudB and CloudA may send information in an IMS network communication manner, and the first upgrade-information-subscription response may be response information (200 OK) sent when a message is received in the IMS network communication manner, which represents that a server corresponding to CloudA receives the first upgrade-information-subscription request sent by CloudB.

S906, CloudA sends a subscription notification message (notification message) to CloudB.

The subscription notification message is sent after CloudA receives an upgrade-subscription request sent by CloudB and agrees with the upgrade-subscription request sent by CloudB. The subscription notification message may contain device model information corresponding to device A, latest version information corresponding to device A, and an acquisition network address corresponding to an update file in CloudA. Furthermore, the subscription notification message may be sent by CloudA according to the first upgrade-information-subscription request, and the first upgrade-information-subscription request contains a device model and ID information of CloudB. CloudA may monitor, according to the device model, existence of a new update file for the device of the model, determine an upgrade file corresponding to the device model and an address (a manufacture upgrade server address) corresponding to the upgrade file, and send the subscription notification message to CloudB. CloudA may also determine, according to the ID information of CloudB, a destination address and a destination device of the first upgrade-information-subscription request.

S907, CloudB acquires the upgrade file from CloudA according to the address of the upgrade file.

CloudB may send a file acquisition request (a first file-acquisition request) to CloudA according to the address of the upgrade file, and CloudA receives the file acquisition request and sends the upgrade file to CloudB.

S908, CloudB determines a pushing range for a device upgrade message according to the latest version of the current model.

CloudB can compare the latest version of the current model with the version information (the current version number) sent by device A to CloudB, and determine whether the upgrade information needs to be pushed to device A. Alternatively, CloudB may uniformly push the upgrade information to all devices of this model.

S909, CloudB pushes the upgrade message to device A.

The upgrade message contains the latest version information, and the upgrade message indicates whether device A is to be upgraded. The upgrade message can further contain the storage address of the upgrade file on CloudB.

S910, device A confirms the upgrade.

Device A receives the latest version information contained in the upgrade message, compares the latest version information with the current version information of device A, and confirms that the device is in the upgrade-confirmation status.

When the information of the latest version is the same as the information of the current version of device A, it indicates that device A is in the latest version, and therefore the device does not need to be upgraded. When the information of the latest version is different from the information of the current version of device A, it indicates that device A is not in the latest version, and device A is set to the upgrade-confirmation status.

S911, device A acquires the upgrade file from CloudB.

Device A may send a file acquisition request (a second file-acquisition request) to CloudB by using the storage address of the upgrade file in CloudB in the upgrade message pushed by CloudB. After receiving the file acquisition request sent by device A, CloudB sends the upgrade file to device A.

S912, after the device is upgraded, the device version information is updated to CloudB.

After completing upgrade according to the upgrade file, device A sends the corresponding updated version information to CloudB, and CloudB receives the updated version information and updates the version information corresponding to device A. When receiving a subscription notification message for the upgrade file delivered by CloudA next time, CloudB starts another upgrade.

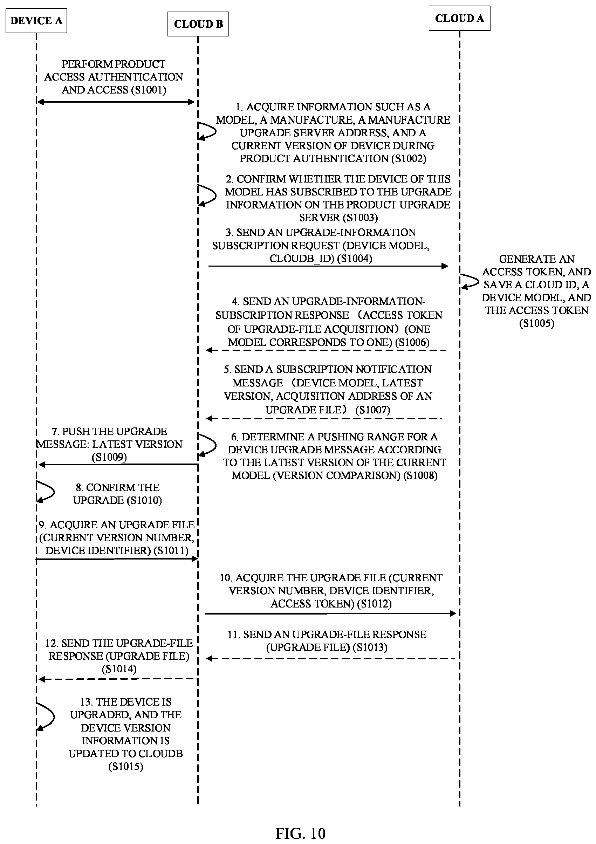

Please refer to Fig. 10, which is a schematic flowchart of device upgrade control provided in an exemplary embodiment of the present disclosure. As illustrated in Fig. 10, for example, the first cloud platform and the second cloud platform are servers, a data transmission process between the terminal and the first cloud platform as well as between the terminal and the second cloud platform in the technical solution illustrated in Fig. 7 is as follows:

S1001, product access authentication and access are performed. Device A (client device) is connected to CloudB (first cloud platform) by means of product access authentication of CloudB.

S1002, CloudB acquires information such as a model, a manufacture, a manufacture upgrade server address, and a current version of device A. The information such as the model, the manufacture, the manufacture upgrade server address, and the current version of device A may be acquired by CloudB by sending an acquisition request to device A, and may also be sent to CloudB by device A during product access authentication with CloudB.

S 1003, CloudB confirms whether the device of this model has subscribed to the upgrade information on the product upgrade server.

The device of this model is a device corresponding to the model of device A, and the product upgrade server is a server CloudA (a second cloud platform) corresponding to device A. When CloudB has subscribed to upgrade information corresponding to the device of the model from CloudA, that is the upgrade information corresponding to the device of the model issued by CloudA has already existed in CloudB, and device A may directly send a request to CloudB for updating. When CloudB does not subscribe to the upgrade information corresponding to the device of this model from CloudA, it indicates that CloudB is unable to instruct device A to complete the device upgrade at this time, and therefore, CloudB needs further information interaction with CloudA.

In S1004, CloudB sends a first upgrade-information-subscription request to CloudA.

The first upgrade-information-subscription request contains a device model and ID information of CloudB.

In S1005, after receiving the upgrade-subscription request sent by CloudB, CloudA generates an access token, and saves a correspondence between the ID of CloudB and the access token.

The access token is generated according to the device model information in the upgrade-subscription request sent by CloudB. CloudA receives the device model information in the upgrade-subscription request, confirms a corresponding upgrade file according to the device model information, and generates a corresponding access token according to the upgrade file.

In S1006, after receiving the first upgrade-information-subscription request sent by CloudB, CloudA sends a first upgrade-information-subscription response to CloudB.

CloudB and CloudA may send information in an IMS network communication manner, and the first upgrade-information-subscription response may be response information (200 OK) sent when a message is received in the IMS network communication manner, which represents that the first upgrade-information-subscription request sent by CloudB is received by a server corresponding to CloudA. The response may contain the access token generated by CloudA, where the access token is an access token generated according to a device model, that is, one device model corresponds to one access token.

S1007, CloudA sends a subscription notification message (notification message) to CloudB.

S1008, CloudB determines a pushing range for a device upgrade message according to the latest version of the current model.

CloudB can compare the latest version of the current model with the version information (the current version number) sent by device A to CloudB, and determine whether the upgrade information needs to be pushed to device A. Alternatively, CloudB may uniformly push the upgrade information to all devices of this model.

CloudB may compare the latest version of the current model with the version information sent by device A to CloudB, so as to determine whether the upgrade information needs to be pushed to device A; or CloudB may uniformly push the upgrade information to all devices of this model.

S1009, CloudB pushes the upgrade message to device A.

The upgrade message contains the latest version information, and the upgrade message indicates whether device A is to be upgraded. The upgrade message can further contain a storage address of the upgrade file on CloudB.

S 1010, device A confirms the upgrade.

That is, device A receives the latest version information contained in the upgrade message, compares the latest version information with the current version information of device A, and confirms that the device is in an upgrade-confirmation status.

S 1011, device A sends a first file-acquisition request to CloudB.

The first file-acquisition request may contain current version information of device A and device identifier information of device A.

S1012, CloudB sends a second file-acquisition request to CloudA.

The second file-acquisition request contains the access token which is sent by CloudA to CloudB through the first upgrade-information-subscription response. The second file-acquisition request can further contain the current version information of device A and the device identifier information of device A that are in the first file-acquisition request.

S1013, CloudA sends a first upgrade-file-response to CloudB.

The first upgrade-file-response may be generated by CloudA by using the access token. CloudA receives the second file-acquisition request sent by CloudB, determines, according to the access token in the second file-acquisition request, an upgrade file corresponding to the access token, and sends the upgrade file to CloudB by using the first upgrade-file-response.

S1014, CloudB sends a second upgrade-file-response to device A.

The second upgrade-file-response contains the upgrade file. After receiving the first upgrade-file-response sent by CloudA, CloudB acquires the upgrade file in the first upgrade-file-response, determines, according to the first file-acquisition request, device A corresponding to the upgrade file, and sends the upgrade file to device A.

When the first file-acquisition request contains the version number information of device A, or the first file-acquisition request contains the device identifier of device A, CloudB determines, according to the version number information of device A or the device identifier of device A, device A corresponding to the upgrade file, and sends the upgrade file to device A.

S1015, after the device is upgraded, the device version information is updated to CloudB.

After performing upgrading according to the upgrade file, device A sends the corresponding updated version information after upgrading to CloudB, and CloudB receives the updated version information and updates the version information corresponding to device A. When CloudB receives a subscription notification message for the upgrade file delivered by CloudA next time, CloudB starts another update.

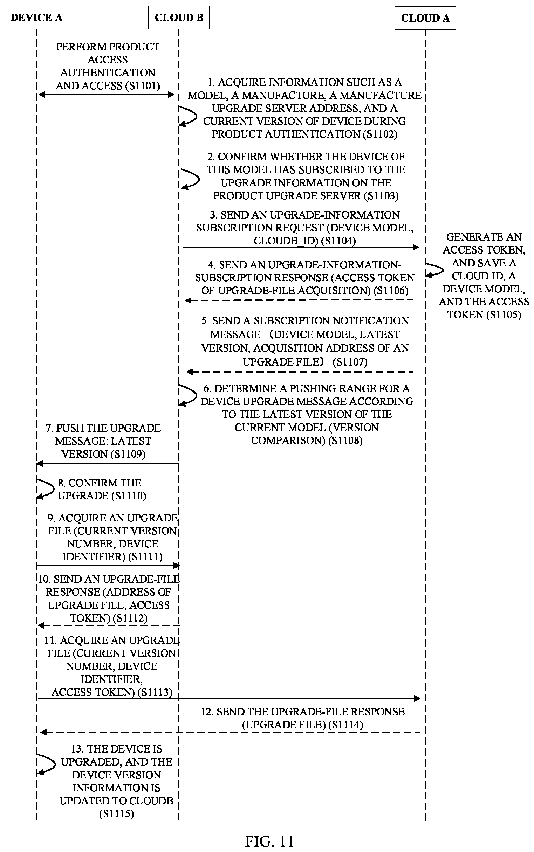

Please refer to Fig. 11, which is a schematic flowchart of device upgrade control provided in an exemplary embodiment of the present disclosure. As illustrated in Fig. 11, for example, the first cloud platform and the second cloud platform are servers, a data transmission process between the terminal and the first cloud platform as well as between the terminal and the second cloud platform in the technical solution illustrated in Fig. 7 is as follows.

S 1101, product access authentication and access are performed. Device A (a client device) performs product access authentication through Cloud B (a first cloud platform), and connects to the Cloud B.

S1102, CloudB acquires information such as a model, a manufacture, an address of a manufacture upgrade server, and a current version of device A, where the information such as the model, the manufacture, the address of the manufacture upgrade server, and the current version of device A may be acquired by CloudB by delivering an acquisition request to device A, and may also be sent to CloudB during product access authentication between device A and CloudB.

S 1103, CloudB confirms whether the device of this model has subscribed to the upgrade information on the product upgrade server.

The device of this model is a device of the model corresponding to device A, and the product upgrade server is a server CloudA (a second cloud platform) corresponding to device A. When CloudB has subscribed to upgrade information corresponding to a device of the model from CloudA, that is, the upgrade information corresponding to the device of the model issued by CloudA already exists in CloudB, device A may directly send a request to CloudB for updating. When CloudB does not subscribe to the upgrade information corresponding to the device of this model from CloudA, it indicates that CloudB is unable instruct device A to complete the device upgrade at this time, and therefore, CloudB needs further information interaction with CloudA.

S1104, CloudB sends a first upgrade-information-subscription request to CloudA.

The first upgrade-information-subscription request contains a device model and ID information of CloudB.

S1105, after receiving the upgrade-subscription request sent by CloudB, CloudA generates an access token, and saves a corresponding relationship between CloudB ID and the access token.

The access token is generated according to device model information in the upgrade-subscription request sent by CloudB. CloudA receives the device model information in the upgrade-subscription request, confirms a corresponding upgrade file according to the device model information, and generates a corresponding access token according to the upgrade file.

S 1106, after receiving the first upgrade-information-subscription request sent by CloudB, CloudA sends a first upgrade-information-subscription response to CloudB.

CloudB and CloudA may send information in an IMS network communication manner, and the first upgrade-information-subscription response may be response information (200 OK) sent when a message is received in the IMS network communication manner, which represents the first upgrade-information-subscription request sent by CloudB is received by a server corresponding to CloudA. The response may include the access token generated by CloudA, where the access token is an access token generated according to a device model, that is, one device model corresponds to one access token.

S 1107, CloudB determines a pushing range for a device upgrade message according to the latest version of the current model.

CloudB can compare the latest version of the current model with the version information (the current version number) sent by device A to CloudB, and determine whether the upgrade information needs to be pushed to device A. Alternatively, CloudB may uniformly push the upgrade information to all devices of this model.

S1108, CloudB determines a pushing range for a device upgrade message according to the latest version of the current model.

CloudB may compare the latest version of the current model with the version information sent by device A to CloudB, so as to determine whether the upgrade information needs to be pushed to device A. Alternatively, CloudB may uniformly push the upgrade information to all devices of this model.

S1109, CloudB pushes the upgrade message to device A.

The upgrade message contains the latest version information, and the upgrade message indicates whether device A is to be upgraded. The upgrade message can further contain a storage address of the upgrade file on CloudB.

S1110, device A confirms the upgrade.

That is, device A receives the latest version information contained in the upgrade message, compares the latest version information with the current version information of device A, and confirms that the device is in an upgrade-confirmation status.

When the information of the latest version is the same as the information of the current version of device A, it indicates that device A is in the latest version, and therefore the device does not need to be upgraded. When the information of the latest version is different from the information of the current version of device A, it indicates that device A is not in the latest version, and device A is set to the upgrade-confirmation status.

S1111, device A sends a third file-acquisition request to CloudB.

The third file-acquisition request may contain current version information of device A, or the third file-acquisition request may contain device identifier information of device A.

S1112, CloudB sends a third upgrade-file response (an upgrade-file acquisition response) to device A.

The third upgrade-file response is generated after CloudB receives the third file-acquisition request sent by device A, where the third upgrade-file response may contain an address of the upgrade file and an access token. When the third file-acquisition request contains the current version information of device A and the device identifier information of device A, CloudB sends the third upgrade-file response to device A according to the current version information of device A and the device identifier information of device A. The current version information of device A and the device identifier information of device A are used to instruct CloudB to send information to device A.

S1113, device A sends a file acquisition request to CloudA.

The file acquisition request contains an access token, and the fourth upgrade file can further contain current version information of device A and device identifier information of device A. Device A sends, according to the address information of the upgrade file contained in the third upgrade-file response sent by CloudB, a fourth file-acquisition request containing the access token to CloudA, where the access token is used to acquire from CloudA the upgrade file corresponding to device A.

S1114, CloudA sends a fourth upgrade-file response to device A.

The fourth upgrade-file response contains the upgrade file corresponding to device A. When receiving the fourth file-acquisition request sent by device A, CloudA determines, according to the access token in the fourth file-acquisition request, the upgrade file corresponding to the access token, and sends the upgrade file to device A through the fourth upgrade-file response.

S1115, after the device is upgraded, the device version information is updated to CloudB.

After performing upgrading according to the upgrade file, device A sends the corresponding updated version information after upgrading to CloudB, and CloudB receives the updated version information and updates the version information corresponding to device A. When CloudB receives a subscription notification message for the upgrade file delivered by CloudA next time, CloudB starts another updating.

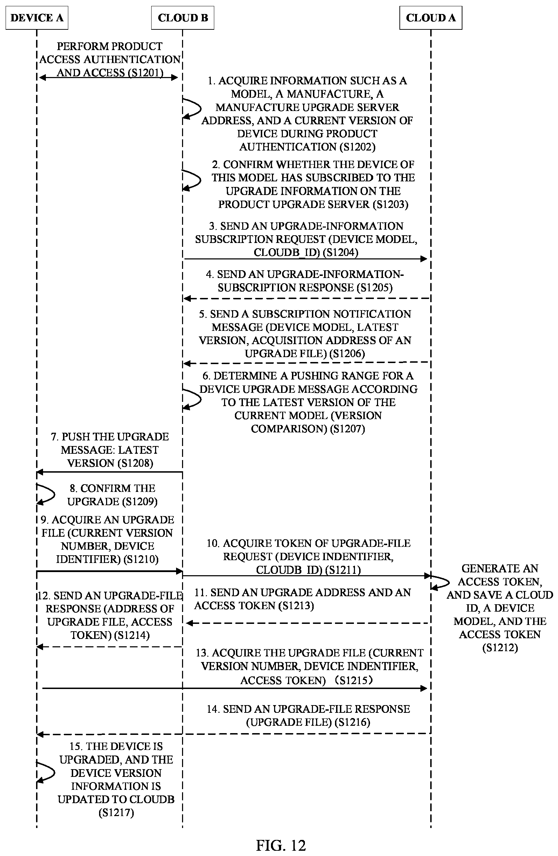

Please refer to Fig. 12, which is a schematic flowchart of device upgrade control provided in an exemplary embodiment of the present disclosure. As illustrated in Fig. 12, the first cloud platform and the second cloud platform for example are servers. A data transmission process between the terminal and the first cloud platform as well as between the terminal and the second cloud platform in the technical solution illustrated in Fig. 7 is as follows.

S1201, product access authentication and access are performed. Device A is connected to CloudB (a first cloud platform) by means of product access authentication of CloudB.

S1202, CloudB acquires information such as a model, a manufacture, a manufacture upgrade server address, and a current version of device A, where the information such as the model, the manufacture, the manufacture upgrade server address, and the current version of device A may be acquired by CloudB by delivering an acquisition request to device A, and may also be sent to CloudB during product access authentication between device A and CloudB.

S1203, CloudB confirms whether the device of this model has subscribed to the upgrade information on the product upgrade server.

The device of this model is a device of a model corresponding to device A, and the product upgrade server is a server CloudA (a second cloud platform) corresponding to device A. When CloudB has subscribed to CloudA for upgrade information corresponding to a device of the model, that is, the upgrade information corresponding to the device of the model issued by CloudA has already existed in CloudB, device A may directly send a request to CloudB for updating. When CloudB does not subscribe to CloudA for the upgrade information corresponding to the device of this model, it indicates that CloudB is unable to instruct device A to complete the device upgrade at this time, and therefore, CloudB needs further information interaction with CloudA.

S1204, CloudB sends a first upgrade-information-subscription request to CloudA.

The first upgrade-information-subscription request contains a device model and ID information of CloudB.

S1205, after receiving the first upgrade-information-subscription request sent by CloudB, CloudA sends a first upgrade-information-subscription response to CloudB.

CloudB and CloudA may send information in an IMS network communication manner, and the first upgrade-information-subscription response may be response information

(200 OK) sent when a message is received in the IMS network communication manner, which represents the first upgrade-information-subscription request sent by CloudB is received by a server corresponding to CloudA.

S1206, CloudA sends a subscription notification message to CloudB.

The subscription notification message is sent after CloudA receives an upgrade-subscription request sent by CloudB and agrees with the upgrade-subscription request sent by CloudB. The subscription notification message may contain device model information corresponding to device A, latest version information corresponding to device A, and an acquisition network address corresponding to an upgrade file in CloudA. Furthermore, the subscription notification message may be sent by CloudA according to a first upgrade-information-subscription request, the first upgrade-information-subscription request contains a device model and ID information of a CloudB, and CloudA may determine, according to the device model, an upgrade file corresponding to the device model and an address of the upgrade file (a manufacturer upgrade server address) corresponding to the upgrade file. CloudA may also determine a destination address and a destination device of the first upgrade-information-subscription request according to the ID information of CloudB.

S1207, ClouldB determines a pushing range of a device upgrade message according to the latest version of the current model.

CloudB can compare the latest version of the current model with the version information (the current version number) sent by device A to CloudB, and determine whether the upgrade information needs to be pushed to device A. Alternatively, CloudB may uniformly push the upgrade information to all devices of this model.

S1208, CloudB pushes the upgrade message to device A.

The upgrade message contains the latest version information, and the upgrade message indicates whether device A is to be upgraded. The upgrade message can further contain a storage address of the upgrade file on CloudB.

S1209, device A confirms the upgrade.

That is, device A receives the latest version information contained in the upgrade message, compares the latest version information with the current version information of device A, and confirms that the device is in the upgrade-confirmation status.

When the information of the latest version is the same as the information of the current version of device A, it indicates that device A is in the latest version, and therefore device A does not need to be upgraded. When the information of the latest version is different from the information of the current version of device A, it indicates that device A is not the latest version, and device A is set to the upgrade-confirmation status.

S1210, device A sends a third file-acquisition request to CloudB.

The file acquisition request may contain current version information of device A and device identifier information of device A.

S1211, CloudB sends an address acquisition response to CloudA.

The address acquisition response is used for acquiring from CloudA an access token corresponding to the upgrade file, and the address acquisition response contains a device model corresponding to device A and ID information of CloudB. The sixth file-acquisition request can further contain the device identifier corresponding to device A.

S1212, CloudA generates an access token corresponding to the upgrade file.

In response to receiving the address acquisition response sent by CloudB, CloudA generates the access token corresponding to the upgrade file according to the ID of CloudB, the device model corresponding to device A, and the device identifier corresponding to device A.

S1213, CloudA sends an upgrade-file acquisition response to CloudB.

The upgrade-file acquisition response contains an upgrade file address corresponding to the upgrade file and the access token corresponding to the upgrade file, where the upgrade file address indicates a network address where the upgrade file is saved in CloudA.

S1214, CloudB sends a third upgrade-file response to device A.

The third upgrade-file response contains the upgrade file address and the access token. After receiving the upgrade-file acquisition response sent by CloudA, CloudB acquires the upgrade file address and the access token from the upgrade-file acquisition response, determines, according to the third file acquisition request, device A corresponding to the upgrade file address, and sends the upgrade file address and the access token to device A.

When the upgrade-file acquisition response contains version number information of device A, or the third file-acquisition request contains the device identifier of device A, CloudB determines, according to the version number information of device A or the device identifier of device A, device A corresponding to the upgrade file address, and sends the upgrade file address and the access token to device A through the third upgrade-file response.

S1215, device A sends a fourth file-acquisition request to CloudA to acquire the upgrade file.

Device A sends the fourth file-acquisition request to CloudA according to the address of the upgrade file, where the fourth file-acquisition request information contains the access token corresponding to the upgrade file. CloudA determines the upgrade file according to the access token, and sends the upgrade file to device A.

S1216, CloudA sends a fourth upgrade-file response to device A.

S1217, after the device is upgraded, device version information is updated to CloudB.

After performing upgrading according to the upgrade file, device A sends the corresponding updated version information after upgrading to CloudB, and CloudB receives the updated version information and updates the version information corresponding to device A. When CloudB receives a subscription notification message for the upgrade file delivered by CloudA next time, CloudB starts another updating.

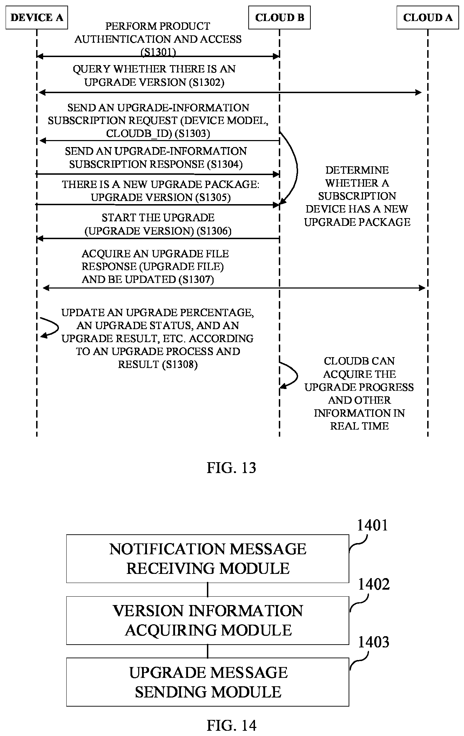

Please refer to Fig. 13, which is a schematic flowchart of device upgrade control according to an exemplary embodiment of the present disclosure. As illustrated in Fig. 13, the first cloud platform and the second cloud platform are servers for example. A data transmission process between the terminal and the first cloud platform as well as between the terminal and the second cloud platform in the technical solution illustrated in Fig. 8 is as follows.

S1301, product access and authentication are performed. Device A (a client device) is connected to Cloud B (a first cloud platform) through product access authentication of Cloud B.

S1302, device A queries whether CloudA has an upgrade version corresponding to device A.

Device A may send a notification inquiry request to CloudA, where the notification inquiry request is used to request to acquire latest version information of device A. The notification inquiry request may contain a device model corresponding to device A. After receiving the notification inquiry request, CloudA determines, according to the device model corresponding to device A, whether CloudA has the upgrade version corresponding to device A.

The notification inquiry request can further contain current version information of device A. CloudA compares the current version information of device A with latest version information in CloudA, and when the latest version information of device A is higher than the current version information of device A, it indicates that CloudA has the upgrade version corresponding to device A. In this case, CloudA sends the information of the corresponding upgrade version to device A via a notification message.

Alternatively, CloudA directly sends to device A the latest version information corresponding to device A without comparing the current version information with the latest version information of device A.

S1303, CloudB sends an upgrade-information subscription request (a second upgrade-information-subscription request) to device A, where the upgrade-information subscription request may contain a device model and identifier (ID) of CloudB. The upgrade-information subscription request is used for subscribing to device A for the latest version information of device A.

S1304, device A sends an upgrade-information subscription response (a second upgrade-information-subscription response) to CloudB, where the upgrade-information subscription response indicates that CloudB successfully initiates subscription to device A.

S1305, after the subscription is successful, device A pushes the latest version information to CloudB.

S1306, when CloudB receives the notification message, compares the latest version information of device A in the notification message with the current version information of device A. When the latest version information is higher than the current version information, CloudB issues an upgrade message to device A, where the upgrade message instructs device A to start the upgrade.

S1307, device A acquires an upgrade file response (namely, an upgrade file) and is updated according to the upgrade file.

Device A may acquire the upgrade file in CloudA in any manner described in the embodiments corresponding to Fig. 7 to Fig. 10, and details are not repeatedly described herein.

S1308, when terminal A is updated according to the upgrade file, and the upgrade information corresponding to terminal A is acquired in real time.

The upgrade information includes information such as an upgrade percentage, an upgrade status, and an upgrade result. The first cloud platform may acquire in real time upgrade information in the process of upgrading the client device according to the upgrade file. Correspondingly, terminal A transmits the upgrade information to CloudB in real time.

The following describes device embodiments of the present disclosure, which can execute the method embodiments of the present disclosure. For details not disclosed in the device embodiments of the present disclosure, refer to the method embodiments of the present disclosure.

Please refer to Fig. 14, which illustrates a block diagram of an apparatus for device upgrade control according to an exemplary embodiment of the present disclosure. The apparatus is used for a first cloud platform, and the first cloud platform is a cloud platform accessed by a client device. The apparatus has the function of implementing the method for device upgrade control. As illustrated in Fig. 14, the apparatus may include a notification message receiving module 1401, a version information acquiring module 1402, and an upgrade message sending module 1403.

The notification message receiving module 1401 is configured to receive a notification message sent by a first device. The notification message contains latest version information of the client device, and the first device includes at least one of the client device and a second cloud platform. The version information acquiring module 1402 is configured to acquire current version information of the client device. The upgrade message sending module 1403 is configured to send an upgrade message to the client device when a version corresponding to the latest version information is higher than a version corresponding to the current version information, and the upgrade message is used for triggering the client device to perform version upgrade.

In a possible implementation, when the first device is the second cloud platform, the apparatus further includes a first device-information-acquiring module, a first subscription-request-sending module, and a first response-receiving module. The first device-information-acquiring module is configured to acquire device information of the client device when the client device accesses the first cloud platform. The device information contains a device model of the client device. The first subscription-request-sending module is configured to send a first upgrade-information-subscription request to the second cloud platform when the notification message corresponding to the device model is not subscribed to from the second cloud platform. The first upgrade-information-subscription request contains the device model and an identifier of the first cloud platform. The first response-receiving module is configured to receive a first upgrade-information-subscription response sent by the second cloud platform.

In a possible implementation, when the first device is the first cloud platform, the apparatus further includes a second device-information-acquiring module, a second subscription-request-sending module, and a second response-receiving module. The second device-information-acquiring module is configured to acquire device information of the client device when the client device accesses the first cloud platform. The device information contains a device model of the client device. The second subscription-request-sending module is configured to send a second upgrade-information-subscription request to the client device when the notification message corresponding to the device model is not subscribed to from the client device. The second upgrade-information-subscription request contains the device model and an identifier of the first cloud platform. The second response-receiving module is configured to receive a first upgrade-information-subscription response sent by the client device.

In a possible implementation, the notification message contains an address of an upgrade file of the client device, and the apparatus further includes a first request-sending module, a first upgrade-file-receiving module, and a first upgrade-file-sending module. The first request-sending module is configured to send a first file-acquisition request to the second cloud platform according to the address of the upgrade file. The first upgrade-file-receiving module is configured to receive the upgrade file sent by the second cloud platform. The first upgrade-file-sending module is configured to send the upgrade file to the client device upon receiving a second file-acquisition request sent by the client device.

In a possible implementation, the notification message contains an address of an upgrade file of the client device, and the apparatus further includes a second request-sending module, a second upgrade-file receiving module, and a second upgrade-file sending module. The second request-sending module is configured to send a first file-acquisition request to the second cloud platform according to the address of the upgrade file, upon receiving a second file-acquisition request sent by the client device. The second upgrade-file receiving module is configured to receive the upgrade file sent by the second cloud platform. The second upgrade-file sending module is configured to send the upgrade file to the client device.

In a possible implementation, the first request-sending module is further configured to send the first file-acquisition request containing an access token to the second cloud platform according to the address of the upgrade file.

In a possible implementation, the notification message contains an address of an upgrade file of the client device, and the apparatus further includes a first file-response-sending module. The first file-response-sending module is configured to send an upgrade-file acquisition response to the client device upon receiving a third file-acquisition request sent by the client device, where the upgrade-file acquisition response contains the address of the upgrade file.

In a possible implementation, the first upgrade-information-subscription response and the upgrade-file acquisition response each contain an access token.

In a possible implementation, the apparatus further includes an address request sending module, an address response receiving module, and a second file-response sending module. The address request sending module is configured to send an address acquisition request to the second cloud platform upon receiving a third file-acquisition request sent by the client device, where the address acquisition request contains a device model. The address response receiving module is configured to receive an address acquisition response sent by the second cloud platform, where the address acquisition response contains an address of an upgrade file of the client device. The second file-response sending module is configured to send an upgrade-file acquisition response to the client device, where the upgrade-file acquisition response contains the address of the upgrade file.

In a possible implementation, the address acquisition response and the upgrade-file acquisition response each further contain an access token.

In conclusion, in the technical solutions according to the embodiment of the present disclosure, the latest version message of the client device sent by the second cloud platform is received by means of the first cloud platform connected to the client device, and whether the client device needs to be upgraded is determined by comparing the current version information with the latest version information of the client device. When the client device needs to be upgraded, an upgrade message is sent to the client device, thus, the client device is upgraded. Namely, in the described technical solution, the client device can be directly indicated an upgrade process of the client device via the first cloud platform by means of information interaction between the first cloud platform and the second cloud platform, thereby improving the upgrade control efficiency of the client device.

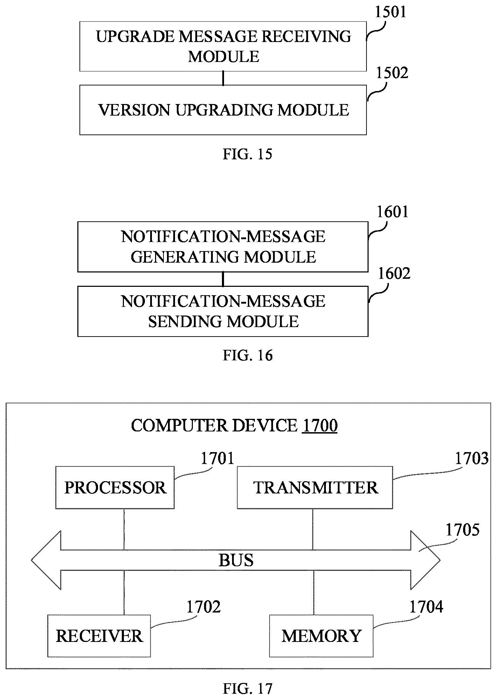

Please refer to Fig. 15, which is illustrates a block diagram of an apparatus for device upgrade control provided in an exemplary embodiment of the present disclosure. The apparatus is used for a client device and has the function of implementing the method for device upgrade control. As illustrated in Fig. 15, the apparatus may include an upgrade message receiving module 1501 and a version upgrading module 1502. The upgrade message receiving module 1501 is configured to receive an upgrade message sent by a first cloud platform, where the first cloud platform is a cloud platform accessed by the client device, the upgrade message is sent when the first cloud platform receives a notification message sent by a first device and a version corresponding to latest version information of the client device contained in the notification message is higher than a version corresponding to current version information of the client device. The version upgrading module 1502 is configured to perform version upgrade according to the upgrade message.

In a possible implementation, when the first device is a second cloud platform, the version upgrading module 1502 includes: a first file-request-sending unit, which is configured to send a second file-acquisition request to the first cloud platform; a first file-receiving unit, which is configured to receive an upgrade file of the client device sent by the first cloud platform; and a first version-upgrading unit, which is configured to perform version upgrade according to the upgrade file.

In a possible implementation, when the first device is a second cloud platform, the version upgrading module 1502 includes: a second file-request sending unit, which is configured to send a third file-acquisition request to the first cloud platform; a first file-address-receiving unit, which is configured to receive an upgrade-file acquisition response sent by the first cloud platform, where the upgrade-file acquisition response contains an address of an upgrade file of the client device; a third file-request sending unit, which is configured to send a fourth file-acquisition request to the second cloud platform according to the address of the upgrade file; a second file-receiving unit, which is configured to receive the upgrade file sent by the second cloud platform; and a second version-upgrading unit, which is configured to perform version upgrade according to the upgrade file.

In a possible implementation, the upgrade-file-acquisition response further contains an access token, and the third file-request sending unit is further configured to send the fourth file-acquisition request containing the access token to the second cloud platform according to the address of the upgrade file.

In a possible implementation, the first device is the client device. The apparatus further includes a second device-information receiving module, a second subscription-request-receiving module, a second response-sending module, and a second notification-message sending module. The second device-information receiving module is configured to send device information of the client device to the first cloud platform when the client device accesses the first cloud platform, where the device information contains a device model of the client device. The second subscription-request-receiving module is configured to receive a second upgrade-information-subscription request sent by the first cloud platform, where the second upgrade-information-subscription request is sent when the notification message corresponding to the device model is not subscribed to from the client device by the first cloud platform, and the second upgrade-information-subscription request contains the device model and an identifier of the first cloud platform. The second response-sending module is configured to send a second upgrade-information-subscription response to the first cloud platform. The second notification-message sending module is configured to send the notification information to the first cloud platform.

In a possible implementation, the apparatus further includes: a notification-request sending module, which is configured to send a notification inquiry request to the second cloud platform, where the notification inquiry request is used to acquire the latest version information of the client device; a notification receiving module, which is configured to receive the notification message sent by the second cloud platform; and a notification sending module, which is configured to send the notification message to the first cloud platform.

In conclusion, in the technical solutions according to the embodiment of the present disclosure, the latest version message of the client device sent by the second cloud platform is received by means of the first cloud platform connected to the client device, and whether the client device needs to be upgraded is determined by comparing the current version information with the latest version information of the client device. When the client device needs to be upgraded, an upgrade message is sent to the client device, thus, the client device is upgraded. Namely, in the described technical solution, the client device can be directly indicated an upgrade process of the client device via the first cloud platform by means of information interaction between the first cloud platform and the second cloud platform, thereby improving the upgrade control efficiency of the client device.

Please refer to Fig. 16, which illustrates a block diagram of an apparatus for device upgrade control provided in an exemplary embodiment of the present disclosure. The apparatus is applicable to a second cloud platform and has the function of implementing the method for device upgrade control. As illustrated in Fig. 16, the apparatus may include a notification-message generating module 1601 and a notification-message sending module 1602.

The notification-message generating module 1601 is configured to generate a notification message containing latest version information when there is an upgrade file of a latest version of a client device, where the notification message contains the latest version information of the client device.

The notification-message sending module 1602 is configured to send the notification message to a second device, such that a first cloud platform acquires current version information of the client device upon receiving the notification message and sends an upgrade message to the client device when a version corresponding to the latest version information is higher than a version corresponding to the current version information, where the upgrade message is used for triggering the client device to perform version upgrade, the second device includes the client device or the second cloud platform; the second device includes at least one of the client device and the first cloud platform.

In a possible implementation, when the second device is the first cloud platform, the apparatus further includes: a first subscription-request-receiving module, which is configured to receive a first upgrade-information-subscription request sent by the first cloud platform, where the first upgrade-information-subscription request contains a device model and an identifier of the first cloud platform; and a first response-sending module, which is configured to send a first upgrade-information-subscription response to the first cloud platform.

In a possible implementation, the notification message further contains an address of the upgrade file, and the apparatus further includes: a first request-receiving module, which is configured to receive a first file-acquisition request sent by the first cloud platform according to the address of the upgrade file; and a first upgrade-file-sending module, which is configured to send the upgrade file to the first cloud platform. Alternatively, the apparatus further includes: a first file-request-receiving module, which is configured to receive a fourth file-acquisition request sent by the client device according to the address of the upgrade file; and a first file-sending module, which is configured to send the upgrade file to the client device.

In a possible implementation, the first request-receiving module is configured to receive the first file-acquisition request containing an access token and sent by the first cloud platform according to the address of the upgrade file, and the first file-request-receiving module is configured to receive the fourth file-acquisition request containing the access token and sent by the client device according to address of the upgrade file.

In a possible implementation, the notification message further contains an address of the upgrade file, and the apparatus further includes an address-request receiving module, an address-response sending module, a second file-request-receiving module, and a second file-sending module. The address-request receiving module is configured to receive an address acquisition request sent by the first cloud platform according to the address of the upgrade file, where the address acquisition request contains the device model. The address-response sending module is configured to send an address acquisition response to the first cloud platform according to the device model, where the address acquisition response contains the address of the upgrade file of the client device. The second file-request-receiving module is configured to receive a fourth file-acquisition request sent by the client device according to the address of the upgrade file. The second file-sending module is configured to send the upgrade file to the client device.

In a possible implementation, the address acquisition response and the fourth file-acquisition request each contain the access token.

In a possible implementation, when the second device is the client device, the apparatus further includes: a notification-request receiving module, which is configured to receive a notification inquiry request sent by the client device, where the notification inquiry request is used to acquire latest version information of the client device; and a notification receiving module, which is configured to send the notification message to the client device.

In conclusion, in the technical solutions according to the embodiment of the present disclosure, the latest version message of the client device sent by the second cloud platform is received by means of the first cloud platform connected to the client device, and whether the client device needs to be upgraded is determined by comparing the current version information with the latest version information of the client device. When the client device needs to be upgraded, an upgrade message is sent to the client device, thus, the client device is upgraded. Namely, in the described technical solution, the client device can be directly indicated an upgrade process of the client device via the first cloud platform by means of information interaction between the first cloud platform and the second cloud platform, thereby improving the upgrade control efficiency of the client device.

It should be noted that, when the apparatus provided in the foregoing embodiment implements functions of the apparatus, division of the foregoing functional modules is used as an example for illustration. In practical applications, the foregoing functions may be allocated to different functional modules for implementation according to practical requirements, that is, a content structure of the device is divided into different functional modules to implement all or a part of the foregoing functions.

With respect to the apparatus in the foregoing embodiments, the specific manners in which the modules execute the operations has been described in detail in the embodiments of the method, and are not described in detail herein.

Please refer to Fig. 17, which illustrates a schematic structural diagram of a computer device 1700 provided in an exemplary embodiment of the present disclosure. The computer device 1700 may include a processor 1701, a receiver 1702, a transmitter 1703, a memory 1704, and a bus 1705.

The processor 1701 includes one or more processing cores. The processor 1701 executes various function applications and information processing by running software programs and modules.

The receiver 1702 and the transmitter 1703 may be implemented as a communications component, which may be a communications chip. The communication chip may also be referred to as a transceiver.

The memory 1704 is connected to the processor 1701 by the bus 1705.

The memory 1704 may be configured to store a computer program. The processor 1701 is configured to execute the computer program, so as to implement each step executed by the server device, the device configuration, the cloud platform, or the account server in the foregoing method embodiments.

Additionally, the memory 1704 may be implemented by any type of volatile or non-volatile storage device or their combination. The volatile or non-volatile storage devices include, but are not limited to, a magnetic disk or an optical disk, an electrically erasable programmable read-only memory, an erasable programmable read-only memory, a static random-access memory, a read-only memory, a magnetic memory, a flash memory, and a programmable read-only memory.

In an exemplary embodiment, the computer device includes a processor, a memory, and a transceiver (the transceiver may include a receiver and a transmitter, where the receiver is configured to receive information, and the transmitter is configured to transmit information).

In a possible implementation, when the computer device is implemented as a first cloud platform, the terminal includes a processor, a memory, and a transceiver. The transceiver is configured to receive a notification message sent by a first device, the notification message contains latest version information of the client device, the first device includes at least one of the client device and a second cloud platform. The processor is configured to acquire current version information of the client device. The transceiver is configured to send an upgrade message to the client device when a version corresponding to the latest version information is higher than a version corresponding to the current version information, the upgrade message is used for triggering the client device to perform version upgrade.

In a possible implementation, when the computer device is implemented as a client device, the terminal includes a processor, a memory, and a transceiver. The transceiver is configured to receive an upgrade message sent by a first cloud platform, where the first cloud platform is a cloud platform accessed by the client device, the upgrade message is sent when the first cloud platform receives a notification message sent by a first device and a version corresponding to latest version information of the client device contained in the notification message is higher than a version corresponding to current version information of the client device. The processor is configured to perform version upgrade according to the upgrade message.

In a possible implementation, when the computer device is implemented as a second cloud platform, the terminal includes a processor, a memory, and a transceiver. The processor is configured to generate a notification message containing latest version information when there is an upgrade file of a latest version of a client device, where the notification message contains the latest version information of the client device. The transceiver is configured to send the notification message to a second device, such that a first cloud platform acquires current version information of the client device upon receiving the notification message and sends an upgrade message to the client device when a version corresponding to the latest version information is higher than a version corresponding to the current version information, where the upgrade message is used for triggering the client device to perform version upgrade, the second device includes the client device or the second cloud platform; the second device includes at least one of the client device and the first cloud platform.

The processor and the transceiver in the computer device related to embodiments of the disclosure can perform steps performed by the computer device in any of the methods illustrated in Fig. 2 to Fig. 11, which will not be repeated here.

A computer readable storage medium is further provided in embodiments of the disclosure, in which computer programs are stored. The computer programs are loaded and executed by a processor to implement each step of the method shown in Fig. 4 to Fig. 8.

A computer program product or a computer program are further provided in the disclosure. The computer program product or the computer program have computer instructions stored in a computer readable storage medium. A processor of a computer device is configured to read the computer instructions from the computer readable storage medium, and the processor executes the computer instructions, so as to enable the computer device to execute each step of the method shown in Fig. 4 to Fig. 8.

It will be appreciated by those skilled in the art that the functions described in embodiments of the disclosure can be implemented in hardware, software, firmware or any combination thereof in the above one or more examples. When implemented in the manner of software, the functions may be stored in a computer readable medium or transmitted as one or more instructions or codes in a computer readable medium. The computer readable medium includes a computer storage medium and a communication medium, where the communication medium includes any medium that facilitates the transfer of a computer program from one place to another. The storage medium may be any available medium that can be accessed by a general-purpose or dedicated computer.

The foregoing descriptions are merely exemplary embodiments of the present disclosure, but are not intended to limit the present disclosure. Any modification, equivalent replacement, and improvement made within the spirit and principle of the present disclosure shall belong to the protection scope of the present disclosure.

## Claims

1. A method for device upgrade control, performed by a first cloud platform, the first cloud platform being a cloud platform accessed by a client device, the method comprising:
receiving a notification message sent by a first device, the notification message containing latest version information of the client device, and the first device comprising at least one of the client device and a second cloud platform;
acquiring current version information of the client device; and
sending an upgrade message to the client device when a version corresponding to the latest version information is higher than a version corresponding to the current version information, the upgrade message being used for triggering the client device to perform version upgrade.

2. The method of claim 1, wherein the first device is the second cloud platform, before receiving the notification message sent by the first device, the method further comprises:
acquiring device information of the client device when the client device accesses the first cloud platform, wherein the device information contains a device model of the client device;
sending a first upgrade-information-subscription request to the second cloud platform when the notification message corresponding to the device model is not subscribed to from the second cloud platform, wherein the first upgrade-information-subscription request contains the device model and an identifier of the first cloud platform; and
receiving a first upgrade-information-subscription response sent by the second cloud platform.

3. The method of claim 1, wherein the first device is the client device, before receiving the notification message sent by the first device, the method further comprises:
acquiring device information of the client device when the client device accesses the first cloud platform, wherein the device information contains a device model of the client device;
sending a second upgrade-information-subscription request to the client device when the notification message corresponding to the device model is not subscribed to from the client device, wherein the second upgrade-information-subscription request contains the device model and an identifier of the first cloud platform; and
receiving a second upgrade-information-subscription response sent by the client device.

4. The method of claim 1, wherein the notification message contains an address of an upgrade file of the client device, before sending the upgrade message to the client device, the method further comprises:
sending a first file-acquisition request to the second cloud platform according to the address of the upgrade file;
receiving the upgrade file sent by the second cloud platform; and
sending the upgrade file to the client device upon receiving a second file-acquisition request sent by the client device.

5. The method of claim 1, wherein the notification message contains an address of an upgrade file of the client device, before sending the upgrade message to the client device, the method further comprises:
sending a first file-acquisition request to the second cloud platform according to the address of the upgrade file, upon receiving a second file-acquisition request sent by the client device;
receiving the upgrade file sent by the second cloud platform; and
sending the upgrade file to the client device.

6. The method of claim 4 or 5, wherein sending the first file-acquisition request to the second cloud platform according to the address of the upgrade file comprises:
sending the first file-acquisition request containing an access token to the second cloud platform according to the address of the upgrade file.

7. The method of claim 2, wherein the notification message contains an address of an upgrade file of the client device, the method further comprises:
sending an upgrade-file acquisition response to the client device upon receiving a third file-acquisition request sent by the client device, wherein the upgrade-file acquisition response contains the address of the upgrade file.

8. The method of claim 7, wherein the first upgrade-information-subscription response and the upgrade-file acquisition response each contain an access token.

9. The method of claim 1, further comprising:
sending an address acquisition request to the second cloud platform upon receiving a third file-acquisition request sent by the client device, wherein the address acquisition request contains a device model;
receiving an address acquisition response sent by the second cloud platform, wherein the address acquisition response contains an address of an upgrade file of the client device;
sending an upgrade-file acquisition response to the client device, wherein the upgrade-file acquisition response contains the address of the upgrade file.

10. The method of claim 9, wherein the address acquisition response and the upgrade-file acquisition response each further contain an access token.

11. The method of claim 1, wherein sending the upgrade message to the client device when the version corresponding to the latest version information is higher than the version corresponding to the current version information comprises:
sending the upgrade message to the client device when the version corresponding to the latest version information is an upgraded version of the version corresponding to the current version information.

12. A method of device upgrade control, performed by a client device and comprising:
receiving an upgrade message sent by a first cloud platform, wherein the first cloud platform is a cloud platform accessed by the client device, the upgrade message is sent when the first cloud platform receives a notification message sent by a first device and a version corresponding to latest version information of the client device contained in the notification message is higher than a version corresponding to current version information of the client device; and
performing version upgrade according to the upgrade message.

13. The method of claim 12, wherein performing version upgrade according to the upgrade message comprises:
sending a second file-acquisition request to the first cloud platform;
receiving an upgrade file of the client device sent by the first cloud platform; and
performing version upgrade according to the upgrade file.

14. The method of claim 12, wherein performing version upgrade according to the upgrade message comprises:
sending a third file-acquisition request to the first cloud platform;
receiving an upgrade-file acquisition response sent by the first cloud platform, wherein the upgrade-file acquisition response contains an address of an upgrade file of the client device;
sending a fourth file-acquisition request to a second cloud platform according to the address of the upgrade file;
receiving the upgrade file sent by the second cloud platform; and
performing version upgrade according to the upgrade file.

15. The method of claim 14, wherein the upgrade-file acquisition response further contains an access token, and sending the fourth file-acquisition request to the second cloud platform according to the address of the upgrade file comprises:
sending the fourth file-acquisition request containing the access token to the second cloud platform according to the address of the upgrade file.

16. The method of claim 12, wherein the first device is the client device, before receiving the upgrade message sent by the first cloud platform, the method further comprises:
sending device information of the client device to the first cloud platform when the client device accesses the first cloud platform, wherein the device information contains a device model of the client device;
receiving a second upgrade-information-subscription request sent by the first cloud platform, wherein the second upgrade-information-subscription request is sent when the notification message corresponding to the device model is not subscribed to from the client device by the first cloud platform, and the second upgrade-information-subscription request contains the device model and an identifier of the first cloud platform;
sending a second upgrade-information-subscription response to the first cloud platform; and
sending the notification message to the first cloud platform.

17. The method of claim 16, wherein sending the notification message to the first cloud platform comprises:
sending a notification inquiry request to the second cloud platform, wherein the notification inquiry request is used to acquire the latest version information of the client device;
receiving the notification message sent by the second cloud platform; and
sending the notification message to the first cloud platform.

18. A method for device upgrade control, performed by a second cloud platform and comprising:
generating a notification message containing latest version information when there is an upgrade file of a latest version of a client device, wherein the notification message contains the latest version information of the client device; and
sending the notification message to a second device, such that a first cloud platform acquires current version information of the client device upon receiving the notification message and sends an upgrade message to the client device when a version corresponding to the latest version information is higher than a version corresponding to the current version information, wherein the upgrade message is used for triggering the client device to perform version upgrade, the second device comprises the client device or the second cloud platform, and the second device comprises at least one of the client device and the first cloud platform.

19. The method of claim 18, wherein before generating the notification message containing the latest version information when there is the upgrade file of the latest version of the client device, the method further comprises:
receiving a first upgrade-information-subscription request sent by the first cloud platform, wherein the first upgrade-information-subscription request contains a device model and an identifier of the first cloud platform; and
sending a first upgrade-information-subscription response to the first cloud platform.

20. The method of claim 19, wherein the notification message further contains an address of the upgrade file, and the method further comprises:
receiving a first file-acquisition request sent by the first cloud platform according to the address of the upgrade file; and
sending the upgrade file to the first cloud platform;
or
receiving a fourth file-acquisition request sent by the client device according to the address of the upgrade file; and
sending the upgrade file to the client device.

21. The method of claim 20, wherein
receiving the first file-acquisition request sent by the first cloud platform according to the address of the upgrade file comprises:
receiving the first file-acquisition request containing an access token and sent by the first cloud platform according to the address of the upgrade file,
receiving the fourth file-acquisition request sent by the client device according to the upgrade file comprises:
receiving the fourth file-acquisition request containing the access token and sent by the client device according to address of the upgrade file.

22. The method of claim 21, wherein the notification message further contains the address of the upgrade file, and the method further comprises:
receiving an address acquisition request sent by the first cloud platform according to the address of the upgrade file, wherein the address acquisition request contains the device model;
sending an address acquisition response to the first cloud platform according to the device model, wherein the address acquisition response contains the address of the upgrade file of the client device;
receiving a fourth file-acquisition request sent by the client device according to the address of the upgrade file; and
sending the upgrade file to the client device.

23. The method of claim 22, wherein the address acquisition response and the fourth file-acquisition request each contain the access token.

24. The method of claim 18, wherein the second device is the client device, sending the notification message to the second device comprises:
receiving a notification inquiry request sent by the client device, wherein the notification inquiry request is used to acquire latest version information of the client device; and
sending the notification message to the client device.

25. An apparatus for device upgrade control, applied to a first cloud platform, the first cloud platform being a cloud platform accessed by a client device, the apparatus comprising:
a notification message receiving module, configured to receive a notification message sent by a first device, the notification message containing latest version information of the client device, the first device comprising at least one of the client device and a second cloud platform;
a version information acquiring module, configured to acquire current version information of the client device; and
an upgrade message sending module, configured to send an upgrade message to the client device when a version corresponding to the latest version information is higher than a version corresponding to the current version information, the upgrade message being used for triggering the client device to perform version upgrade.

26. An apparatus for device upgrade control, applied to a client device and comprising:
an upgrade message receiving module, configured to receive an upgrade message sent by a first cloud platform, wherein the first cloud platform is a cloud platform accessed by the client device, the upgrade message is sent when the first cloud platform receives a notification message sent by a first device and a version corresponding to latest version information of the client device contained in the notification message is higher than a version corresponding to current version information of the client device; and
a version upgrading module, configured to perform version upgrade according to the upgrade message.

27. An apparatus for device upgrade control, applied to a second cloud platform and comprising:
a notification message generating module, configured to generate a notification message containing latest version information when there is an upgrade file of a latest version of a client device; and
a notification message sending module, configured to send the notification message to a second device, such that a first cloud platform acquires current version information of the client device upon receiving the notification message and sends an upgrade message to the client device when a version corresponding to the latest version information is higher than a version corresponding to the current version information, wherein the upgrade message is used for triggering the client device to perform version upgrade, the second device comprises the client device or the second cloud platform, and the second device comprises at least one of the client device and the first cloud platform.

28. A computer device, being a first cloud platform, the first cloud platform comprising a processor, a memory, and a transceiver, wherein
the transceiver is configured to receive a notification message sent by a first device, the notification message contains latest version information of the client device, the first device comprises at least one of the client device and a second cloud platform;
the processor is configured to acquire current version information of the client device;
the transceiver is configured to send an upgrade message to the client device when a version corresponding to the latest version information is higher than a version corresponding to the current version information, the upgrade message is used for triggering the client device to perform version upgrade.

29. A computer device, being a client device, the client device comprising a processor, a memory, and a transceiver, wherein
the transceiver is configured to receive an upgrade message sent by a first cloud platform, wherein the first cloud platform is a cloud platform accessed by the client device, the upgrade message is sent when the first cloud platform receives a notification message sent by a first device and a version corresponding to latest version information of the client device contained in the notification message is higher than a version corresponding to current version information of the client device; and
the processor is configured to perform version upgrade according to the upgrade message.

30. A computer device, being a second cloud platform, the second cloud platform comprising a processor, a memory, and a transceiver, wherein
the processor is configured to generate a notification message containing latest version information when there is an upgrade file of a latest version of a client device; and
the transceiver is configured to send the notification message to a second device, such that a first cloud platform acquires current version information of the client device upon receiving the notification message and sends an upgrade message to the client device when a version corresponding to the latest version information is higher than a version corresponding to the current version information, wherein the upgrade message is used for triggering the client device to perform version upgrade, the second device comprises the client device or the second cloud platform, and the second device comprises at least one of the client device and the first cloud platform.

31. A computer readable storage medium storing computer programs which are executed by a processor to implement the method for device upgrade control of any of claims 1 to 24.
